# EUROPEAN PATENT APPLICATION

(11) **EP 4 764 774 A1**
(43) Date of publication of application: **24.06.2026**
(21) Application number: 24925595.1
(22) Date of filing: 25.11.2024
(51) Int. Cl.: G06F 1/16

(54) **KEYBOARD ASSEMBLY AND ELECTRONIC DEVICE**

(30) Priority: 22.02.2024 CN 202410200177; 29.08.2024 WO PCT/CN2024/115555
(71) Applicant: HUAWEI TECHNOLOGIES CO., LTD., Shenzhen 518129 (CN)
(72) Inventor: LUO, Yang, Shenzhen, Guangdong 518129 (CN); HU, Wei, Shenzhen, Guangdong 518129 (CN); ZHEN, Haitao, Shenzhen, Guangdong 518129 (CN); CHEN, Minghao, Shenzhen, Guangdong 518129 (CN); YAO, Lupeng, Shenzhen, Guangdong 518129 (CN); LEI, Yu, Shenzhen, Guangdong 518129 (CN)
(74) Representative: Pfenning, Meinig & Partner mbB
(86) International application number: PCT/CN2024/134327
(87) International publication number: WO 2025/175857

(57) **Abstract**

This application provides a keyboard assembly and an electronic device. The keyboard assembly includes a keyboard body, a first support plate, a second support plate, and a third support plate. The first support plate includes a first plate edge and a second plate edge that are disposed opposite to each other, the second support plate includes a third plate edge and a fourth plate edge that are disposed opposite to each other, the first plate edge is rotatably connected to the third plate edge, the second plate edge is rotatably connected to an end part of the keyboard body, the fourth plate edge is rotatably connected to the third support plate, and the third support plate may be configured to detachably connect to a host of the electronic device. The keyboard assembly provided in this application can provide reliable support for the host of the electronic device according to a multi-rod transmission principle while meeting a requirement for smoothly opening the electronic device. The keyboard assembly has a simple structure. This helps implement a design of miniaturization of the keyboard assembly, and further meets design requirements for lightness, thinness, and miniaturization of the electronic device, thereby meeting a portability requirement of a user, and improving user experience.

## Description

### CROSS-REFERENCE TO RELATED APPLICATIONS

This application claims priorities to Chinese Patent Application No. 202410200177.X, filed with the China National Intellectual Property Administration on February 22, 2024 and entitled "KEYBOARD ASSEMBLY AND ELECTRONIC DEVICE", and to Chinese Patent Application No. PCT/CN2024/115555, filed with the China National Intellectual Property Administration on August 29, 2024 and entitled "KEYBOARD ASSEMBLY AND ELECTRONIC DEVICE", both of which are incorporated herein by reference in their entireties.

### TECHNICAL FIELD

This application relates to the field of electronic device technologies, and in particular, to a keyboard assembly and an electronic device.

### BACKGROUND

With enrichment of people's daily life and increase of economic and commercial activities, portable electronic devices with keyboard input increasingly become one of indispensable terminal products. As one of important parts of these portable electronic devices, keyboards usually need to support hosts of the electronic devices while providing input functions.

Currently, in an electronic device in which a keyboard and a host are separately disposed, to meet a use requirement of the electronic device, a structure of the keyboard is usually complex. Consequently, the keyboard has a large weight and size. The entire electronic device has a large weight, and the entire electronic device has a large thickness when being in a closed state. This is contrary to a portability requirement of users.

In view of this, how to design a structure of a keyboard to enable the keyboard to adapt to a development trend of lightness, thinness, and portability has become an urgent problem to be resolved by a person skilled in the art.

### SUMMARY

This application provides a keyboard assembly and an electronic device, so that the keyboard assembly meets a design requirement for lightness, thinness, and portability, to implement a design of miniaturization, lightness, and thinness of the electronic device, and improve user experience.

According to a first aspect, this application provides a keyboard assembly. The keyboard assembly includes a keyboard body. The keyboard body includes a plurality of keys, and a user may tap the plurality of keys to implement an input function of the keyboard assembly. The keyboard assembly may further include a first support plate, a second support plate, and a third support plate when the keyboard assembly is specifically disposed. The first support plate includes a first plate edge and a second plate edge that are disposed opposite to each other, the second support plate includes a third plate edge and a fourth plate edge that are disposed opposite to each other, the first plate edge is rotatably connected to the third plate edge, and the second plate edge is rotatably connected to an end part of the keyboard body, to implement a rotatable connection between a support component and the keyboard body. In addition, the fourth plate edge of the second support plate is rotatably connected to the third support plate, and the third support plate may be configured to detachably connect to a host of an electronic device. The keyboard assembly provided in this application can provide reliable support for the host of the electronic device according to a multi-rod transmission principle while meeting a requirement for smoothly opening the electronic device. The keyboard assembly has a simple structure. This helps implement a design of miniaturization of the keyboard assembly, and further meets design requirements for lightness, thinness, and miniaturization of the electronic device, thereby meeting a portability requirement of a user, and improving user experience.

In this application, the support component may be rotatably connected to the keyboard body in a plurality of manners. The following describes several possible implementations.

In a possible implementation, the keyboard assembly further includes a first rotating module, the first rotating module includes a first hinge assembly, the first hinge assembly includes a first shaft and a second shaft, an axis of the first shaft is parallel to and does not overlap an axis of the second shaft, the first shaft is fastened to the second plate edge of the first support plate, and the second shaft is fastened to the end part of the keyboard body. In this application, the first hinge assembly of the first rotating module uses the foregoing dual-shaft structure design. This can meet a requirement for relative rotation between the first support plate and the keyboard body, and can improve, when the keyboard assembly is in an open state, coplanarity between the outer surface that is of the first support plate and that is away from the key and the outer surface that is of the keyboard body and that is away from the key, thereby helping improve appearance simplicity of the keyboard assembly.

To facilitate fastening the first hinge assembly to the first support plate and the keyboard body, the first hinge assembly further includes a first fastening bracket and a second fastening bracket. The first fastening bracket is disposed at an end part of the first shaft, and the first fastening bracket is configured to drive the first shaft to rotate synchronously. The second fastening bracket is disposed at an end part of the second shaft, and the second fastening bracket is configured to drive the second shaft to rotate synchronously. In this way, the first hinge assembly can be fastened to the first support plate and the keyboard body by fastening the first fastening bracket to the second plate edge of the first support plate and fastening the second fastening bracket to the end part of the keyboard body. In addition, in this application, the first fastening bracket and the second fastening bracket may be located on a same side of the first hinge assembly in an axial direction of the first rotating module. This can help improve movement stability of the first hinge assembly.

In this implementation, the first hinge assembly further includes a connection member, a first stopper, and a second stopper. The connection member is sleeved on the first shaft and the second shaft, the first stopper is sleeved on the first shaft, the second stopper is sleeved on the second shaft. A relative position between the first stopper and the first shaft is fixed in a rotation direction of the first shaft. A relative position between the second stopper and the second shaft is fixed in a rotation direction of the second shaft. Because the first shaft is fastened to the first support plate, and the second shaft is fastened to the keyboard body, in a process in which the first support plate and the keyboard body rotate back to back, the first stopper can rotate synchronously with the first shaft, and the second stopper can rotate synchronously with the second shaft. When the first stopper abuts against the connection member, and the second stopper abuts against the connection member, the first support plate stops rotating toward a side away from the keyboard body. This can help improve support stability of the keyboard assembly.

To make the first stopper and the second stopper abut against the connection member, an end part that is of the connection member and that faces the first stopper includes a first stop part, an end part that is of the first stopper and that faces the connection member includes a second stop part, and a side surface of the first stop part and a side surface of the second stop part are disposed opposite to each other in the rotation direction of the first shaft. Similarly, an end part that is of the connection member and that faces the second stopper includes a third stop part, an end part that is of the second stopper and that faces the connection member includes a fourth stop part, and a side surface of the third stop part and a side surface of the fourth stop part are disposed opposite to each other in the rotation direction of the second shaft. In this way, when the side surface of the first stop part abuts against the side surface of the second stop part, and the side surface of the third stop part abuts against the side surface of the fourth stop part, the first support plate stops rotating toward the side away from the keyboard body. In this application, the connection member, the first stopper, and the second stopper use the foregoing structure design, so that a structure of the first rotating module can be simple while rotation positions of the first support plate and the keyboard body are stopped.

In this implementation, the first hinge assembly further includes a conjoined cam, a first cam member, and a second cam member, the conjoined cam is sleeved on the first shaft and the second shaft, the first cam member is sleeved on the first shaft, the second cam member is sleeved on the second shaft, and the conjoined cam is located between the first stopper and the first cam. In addition, an end face that is of the conjoined cam and that faces the first cam member includes a first cam surface, an end face that is of the first cam member and that faces the conjoined cam includes a second cam surface, and the first cam surface abuts against the second cam surface. Similarly, an end face that is of the conjoined cam and that faces the second cam member includes a third cam surface, an end face that is of the second cam member and that faces the conjoined cam includes a fourth cam surface, and the third cam surface abuts against the fourth cam surface. In this way, a specific operation damping feeling can be provided for the user in a process in which the user opens the electronic device, to improve user experience.

In addition, in this application, when the first stopper abuts against the connection member, a protrusion part of the first cam surface abuts against a protrusion part of the second cam surface. In addition, when the second stopper abuts against the connection member, a protrusion part of the third cam surface abuts against a protrusion part of the fourth cam surface. In this way, the keyboard assembly can be smoothly opened, and the keyboard assembly can also be stably maintained at a corresponding opening angle under a damping force when being opened to a tail end. Therefore, the electronic device in which the keyboard assembly provided in this application is used does not easily shake in the open state even if the electronic device is subject to a specific external impact force. This helps improve user experience, thereby improving product competitiveness.

To improve support stability of the keyboard assembly in an open state, when the conjoined cam is specifically disposed, the first cam surface may include a first depression part, a second depression part, and a first protrusion part, a depression depth of the second depression part is less than a depression depth of the first depression part, the first protrusion part is located between the first depression part and the second depression part, a surface of the first protrusion part is an arc-shaped surface, and a gradient of a first slope extending from the surface of the first protrusion part to the first depression part is less than a gradient of a second slope extending from the surface of the first protrusion part to the second depression part. In addition, when the keyboard assembly is in a closed state, a protrusion part of the second cam surface of the first cam member is located in the first depression part; and when the connection member abuts against the first stopper, in other words, when the keyboard assembly is in the open state, the protrusion part of the second cam surface of the first cam member is located in the second depression part.

Similarly, the third cam surface includes a third depression part, a fourth depression part, and a second protrusion part, a depression depth of the fourth depression part is less than a depression depth of the third depression part, the second protrusion part is located between the third depression part and the fourth depression part, a surface of the second protrusion part is an arc-shaped surface, and a gradient of a third slope extending from the surface of the second protrusion part to the third depression part is less than a gradient of a fourth slope extending from the surface of the second protrusion part to the fourth depression part. When the keyboard assembly is in the closed state, a protrusion part of the fourth cam surface of the second cam member is located in the third depression part; and when the connection member abuts against the second stopper, the protrusion part of the fourth cam surface of the second cam member is located in the fourth depression part.

In this way, in a process in which the keyboard assembly changes from the closed state to the open state, the first support plate and the keyboard body rotate back to back, and the protrusion part of the second cam surface (the fourth cam surface) moves toward the first protrusion part (the second protrusion part) along the first slope (the third slope). When the protrusion part of the second cam surface (the fourth cam surface) moves to the surface of the first protrusion part (the second protrusion part), due to existence of a damping force, even if no opening force is exerted, the protrusion part of the second cam surface (the fourth cam surface) may also continue to move toward the second depression part (the fourth depression part) under the damping force. When the first stopper (the second stopper) abuts against the connection member, the protrusion part of the second cam surface (the fourth cam surface) is located in the second depression part (the fourth depression part). In this case, the first support plate and the keyboard body may be locked at this opening angle when there is no external action force. This can effectively improve support reliability of the keyboard assembly. Based on this structure design, when the electronic device in which the keyboard assembly is used is in an open use state, even if a weight of the host is large, a size of the first support plate is small, or a tap operation is performed on the host of the electronic device, the electronic device can be stably maintained at the opening angle. This can effectively improve user experience.

In this implementation of this application, the connection member may be further integrated with the conjoined cam. In a specific design, the end part that is of the connection member and that faces the first stopper further includes a fifth cam surface, and the end part that is of the first stopper and that faces the connection member further includes a sixth cam surface. Similarly, the end part that is of the connection member and that faces the second stopper further includes a seventh cam surface, the end part that is of the second stopper and that faces the connection member further includes an eighth cam surface, and the seventh cam surface abuts against the eighth cam surface. When the connection member abuts against the first stopper, a protrusion part of the fifth cam surface abuts against a protrusion part of the sixth cam surface; and when the connection member abuts against the second stopper, a protrusion part of the seventh cam surface abuts against a protrusion part of the eighth cam surface. In the foregoing design, the connection member, the first stop part, and the second stop part can provide a specific damping force while playing a stop role. This helps improve integration of the first rotating module, and further helps implement a design of miniaturization of the keyboard assembly.

In this application, when the end part that is of the connection member and that faces the first stopper further includes a fifth cam surface, the end part that is of the first stopper and that faces the connection member further includes a sixth cam surface, and the fifth cam surface abuts against the sixth cam surface, the fifth cam surface may include a fifth depression part, a sixth depression part, and a third protrusion part when the fifth cam surface is specifically disposed, the third protrusion part is located between the fifth depression part and the sixth depression part, a surface of the third protrusion part is an arc-shaped surface, and a gradient of a fifth slope extending from the surface of the third protrusion part to the fifth depression part is less than a gradient of a sixth slope extending from the surface of the third protrusion part to the sixth depression part. In addition, when the keyboard assembly is in a closed state, a protrusion part of the sixth cam surface of the first stopper is located in the fifth depression part; and when the side surface of the first stop part abuts against the side surface of the second stop part, the protrusion part of the sixth cam surface of the first stopper is located in the sixth depression part.

Similarly, when the end part that is of the connection member and that faces the second stopper further includes a seventh cam surface, the end part that is of the second stopper and that faces the connection member further includes an eighth cam surface, and the seventh cam surface abuts against the eighth cam surface, the seventh cam surface includes a seventh depression part, an eighth depression part, and a fourth protrusion part when the seventh cam surface is specifically disposed, the fourth protrusion part is located between the seventh depression part and the eighth depression part, a surface of the fourth protrusion part is an arc-shaped surface, and a gradient of a seventh slope extending from the surface of the fourth protrusion part to the seventh depression part is less than a gradient of an eighth slope extending from the surface of the fourth protrusion part to the eighth depression part. In addition, when the keyboard assembly is in the closed state, a protrusion part of the eighth cam surface of the second stopper is located in the seventh depression part; and when the side surface of the third stop part abuts against the side surface of the fourth stop part, the protrusion part of the eighth cam surface of the second stopper is located in the eighth depression part.

In this way, in a process in which the keyboard assembly changes from the closed state to the open state, the first support plate and the keyboard body rotate back to back, and the protrusion part of the sixth cam surface (the eighth cam surface) moves toward the third protrusion part (the fourth protrusion part) along the fifth slope (the seventh slope). When the protrusion part of the sixth cam surface (the eighth cam surface) moves to the surface of the third protrusion part (the fourth protrusion part), due to existence of a damping force, even if no opening force is exerted, the protrusion part of the sixth cam surface (the eighth cam surface) may also continue to move toward the sixth depression part (the eighth depression part) under the damping force. When the first stopper (the second stopper) abuts against the connection member, the protrusion part of the sixth cam surface (the eighth cam surface) is located in the sixth depression part (the eighth depression part). In this case, the first support plate and the keyboard body may be locked at this opening angle when there is no external action force. This can effectively improve support reliability of the keyboard assembly. Based on this structure design, when the electronic device in which the keyboard assembly is used is in an open use state, even if a weight of the host is large, a size of the first support plate is small, or a tap operation is performed on the host of the electronic device, the electronic device can be stably maintained at the opening angle. This can effectively improve user experience.

In this implementation, the first hinge assembly may further include a first elastic component and a second elastic component. The first elastic component is sleeved on the first shaft, the first elastic component may be located on a side that is of the first stopper and that is away from the connection member, and the first elastic component presses the first stopper toward the connection member. The second elastic component is sleeved on the second shaft, the second elastic component may be located on a side that is of the second stopper and that is away from the connection member, and the second elastic component presses the second stopper toward the connection member. In this way, the first stopper can be pressed toward the connection member under an elastic action force of the first elastic component, and the second stopper can be pressed toward the connection member under an elastic action force of the connection member. This helps improve movement stability of the first rotating module.

In the foregoing implementation of this application, the first shaft further includes a first spiral surface, the second shaft includes a second spiral surface, and the first spiral surface and the second spiral surface may have a same rotation direction. In addition, the first hinge assembly further includes an idler gear, the idler gear is located between the first spiral surface and the second spiral surface, the first spiral surface is engaged with a gear surface of the idler gear, and the second spiral surface is engaged with the gear surface of the idler gear. In the foregoing design, the first shaft and the second shaft can synchronously rotate reversely. This helps improve rotation stability of the first shaft and the second shaft, thereby improving stability of relative rotation between the first support plate and the keyboard body.

In addition, specific positions at which the first spiral surface and the second spiral surface are disposed are not limited in this application. For example, when the first hinge assembly includes the first fastening bracket and the second fastening bracket, the first spiral surface may be located on a side that is of the connection member and that faces the first fastening bracket, and the second spiral surface may be located on a side that is of the connection member and that faces the second fastening bracket. In addition, a hinge of the idler gear may be mounted on the connection member. This helps improve structure reliability of the first hinge assembly and can make the structure of the first hinge assembly compact, thereby helping implement a design of miniaturization of the first hinge assembly.

In another possible implementation of this application, a first rotating module of the keyboard assembly is of a single-shaft structure. Specifically, the first rotating module includes a first hinge, the second plate edge of the first support plate is rotatably connected to the first hinge, and the end part of the keyboard body is rotatably connected to the first hinge. This helps simplify the structure of the first hinge assembly, thereby helping implement a design of lightness and thinness of the keyboard assembly.

In another possible implementation of this application, a first rotating module of the keyboard assembly is of a shaftless structure. Specifically, the first rotating module is a flexible material layer, the flexible material layer is connected to the first support plate, and the flexible material layer is connected to the end part of the keyboard body. The first rotating module is disposed in the foregoing manner. This can effectively simplify a structure of the keyboard assembly, and helps implement a design of lightness and thinness of the keyboard assembly.

In a possible implementation of this application, when the keyboard assembly is in the closed state, a projection of the first support plate covers a projection of the first rotating module in a direction from the first support plate to the keyboard body. In this way, the appearance of the keyboard assembly can be simple.

In this application, an implementation of the rotatable connection between the first support plate and the second support plate is not limited. For example, in a possible implementation, the keyboard assembly further includes a second rotating module, the second rotating module includes a second hinge and a second hinge assembly, and the second hinge assembly includes a first rotating bracket and a second rotating bracket. The first rotating bracket is rotatably connected to the second hinge, and the first rotating bracket is fastened to the first plate edge of the first support plate. The second rotating bracket is rotatably connected to the second hinge, and the second rotating bracket is fastened to the third plate edge of the second support plate. In this way, the first rotating bracket and the second rotating bracket can be rotatably connected to the second hinge, to implement a rotatable connection between the first support plate and the second support plate.

When the first rotating bracket is specifically disposed, the first rotating bracket includes a first connection plate and a first connection arm, the first connection plate is fastened to the first support plate, the first connection arm is disposed at an end part of the first connection plate, the first connection arm includes a first connection part and a first arc-shaped rotating part, the first connection part and the first arc-shaped rotating part are arranged in an axial direction of the second hinge, and the first connection part is sleeved on the second hinge. Similarly, the second rotating bracket includes a second connection plate and a second connection arm, the second connection plate is fastened to the second support plate, the second connection arm is disposed at an end part of the second connection plate, the second connection arm includes a second connection part and a second arc-shaped rotating part, the second connection part and the second arc-shaped rotating part are arranged in the axial direction of the second hinge, and the second connection part is sleeved on the second hinge. In addition, the first connection arm and the second connection arm are alternately disposed in the axial direction of the second hinge, and a side surface of the first arc-shaped rotating part and a side surface of the second arc-shaped rotating part are disposed opposite to each other in rotation directions of the first rotating bracket and the second rotating bracket. In this application, the second rotating module uses the foregoing design, so that a case like irreversible folding or excessive bending of the first support plate and the second support plate can be effectively avoided in a rotation process. This helps improve operation smoothness in a process of opening and closing the keyboard assembly.

In another possible implementation of this application, the second hinge assembly may alternatively be disposed in another possible manner. For example, the first rotating bracket includes a first connection plate and a first connection arm, the first connection plate is fastened to the first plate edge of the first support plate, the first connection arm is disposed at an end part of the first connection plate, and the first connection arm is an arc-shaped rotating block. Similarly, the second rotating bracket includes a second connection plate and a second connection arm, the second connection plate is fastened to the third plate edge of the second support plate, the second connection arm is disposed at an end part of the second connection plate, and the second connection arm is an arc-shaped rotating block. In addition, the first connection arm and the second connection arm are disposed in a one-to-one correspondence in the axial direction of the second hinge, and a side surface of the first connection arm and a side surface of the second connection arm are disposed opposite to each other in rotation directions of the first rotating bracket and the second rotating bracket. In this way, when the first rotating bracket and the second rotating bracket rotate around the second hinge to a specified angle, the side surface of the first connection arm can abut against the side surface of the second connection arm, to limit rotation positions of the first rotating bracket and the second rotating bracket, so as to limit a rotation angle between the first support plate and the second support plate. This can effectively avoid the case like irreversible folding or excessive bending of the first support plate and the second support plate in the rotation process.

In another possible implementation of this application, the support component further includes a flexible material layer, the flexible material layer is connected to the first plate edge of the first support plate, and the flexible material layer is connected to the third plate edge of the second support plate. In this way, the structure of the keyboard assembly can further be effectively simplified while the first support plate is rotatably connected to the second support plate. This helps implement a design of lightness and thinness of the keyboard assembly.

In a possible implementation of this application, when the keyboard assembly is in an open state, an included angle, facing the key, between an outer surface that is of the first support plate and that is away from the key and an outer surface that is of the keyboard body and that is away from the key is greater than or equal to 175° and less than or equal to 185°. In this way, the outer surface of the first support part and the outer surface of the keyboard body may be approximately coplanar, so that a support reliability requirement of the support component can be met while design difficulty of the first hinge assembly is reduced.

An implementation of the rotatable connection between the second support plate and the third support plate is not limited in this application. For example, in a possible implementation, the third support plate includes a fifth plate edge, and the fifth plate edge is rotatably connected to the fourth plate edge. Because the keyboard assembly uses this design manner, the keyboard assembly can meet use requirements of different types of hosts, and therefore has a wide application scope.

In another possible implementation of this application, the third support plate includes a fifth plate edge, the fourth plate edge of the second support plate is rotatably connected to a plate surface of the third support plate. In addition, the fifth plate edge abuts against the keyboard body when the keyboard assembly is in the open state. The keyboard assembly uses this design manner, and the third support plate, the second support plate, the first support plate, and the keyboard body form an approximate triangular support structure, that is, the keyboard assembly can form a stable support structure. Therefore, the keyboard assembly is applicable to a wider scenario.

In a possible implementation of this application, the keyboard body is provided with a first pen slot, the first support plate is provided with a second pen slot, and when the keyboard assembly is in the closed state, the first pen slot and the second pen slot are disposed opposite to each other to form an accommodation space for accommodating a stylus. In this way, an accommodation requirement of the stylus can be met while a design of thinness of the keyboard assembly is implemented.

According to a second aspect, this application further provides an electronic device. The electronic device includes a host and the keyboard assembly in the first aspect. The host is located on a side that is of the keyboard body and on which a plurality of keys are disposed. The third support plate of the keyboard assembly is detachably connected to the host. In the electronic device provided in this application, the keyboard assembly has a simple structure, and can meet design requirements for lightness, thinness, and miniaturization of the electronic device, thereby meeting a portability requirement of a user, and improving user experience.

In a possible implementation of this application, the host, the second support plate, the first support plate, and the keyboard body form a triangular support structure when the electronic device is in an open state. In this way, the electronic device can be stably remained in the open state, to meet a use requirement of the user.

It may be understood that, in an actual design, due to impact of a design tolerance, a production condition, and the like, an included angle, facing the host, between an outer surface of the first support part and an outer surface of the keyboard body is greater than or equal to 175° and less than or equal to 185° when the electronic device is in the open state. In this case, the outer surface of the first support part and the outer surface of the keyboard body are approximately coplanar. Based on this, when the electronic device is in the open state, the host, the second support plate, the first support plate, and the keyboard body may form an approximate triangular support structure, a support requirement of the electronic device in the open state can still be met.

It should be noted that, in the electronic device, when the first hinge assembly of the first rotating module that is of the keyboard assembly and that is configured to implement a rotatable connection between the first support plate and the keyboard body uses a dual-shaft structure design, movement, driven by the host, of the support component around the keyboard body may be equivalent to five-rod movement. Each of the first support plate, the second support plate, the host, the first hinge assembly, and the keyboard body may be considered as one rod. In addition, a movement pair between the first support plate and the first hinge assembly, a movement pair between the second support plate and the first support plate, a movement pair between the host and the second support plate, and a movement pair between the first hinge assembly and the keyboard body are all low pairs. In other words, a five-rod transmission mechanism includes four low pairs. In addition, the first hinge assembly is a high-pair movement member. Therefore, a degree of freedom of the five-rod transmission mechanism is 3×4-2×5-1=1. Therefore, it may be understood that the degree of freedom of the five-rod transmission mechanism is unique, that is, a movement track of each rod of the five-rod transmission mechanism is unique. In the process in which the support component of the keyboard assembly rotates around the keyboard body, rotation tracks of each support plate and the first hinge assembly are unique. In this way, when the electronic device is in the open state, coplanarity between the outer surface of the first support plate and the outer surface of the keyboard body can be improved, to improve appearance flatness of the keyboard assembly.

In addition, when the first rotating module that is of the keyboard assembly and that is configured to implement a rotatable connection between the first support plate and the keyboard body uses a single-shaft or shaftless structure design, movement, driven by the host, of the support component around the keyboard body may be equivalent to four-rod movement. Each of the first support plate, the second support plate, the host, and the keyboard body may be considered as one rod. A movement pair between the first support plate and the keyboard body, a movement pair between the second support plate and the first support plate, and a movement pair between the host and the second support plate are all low pairs. In this case, a four-rod transmission mechanism includes only four low pairs. Therefore, a degree of freedom of the four-rod transmission mechanism is 3×3-2×4=1. Therefore, it may be understood that the degree of freedom of the four-rod transmission mechanism is unique, that is, a movement track of each rod of the four-rod transmission mechanism is unique. In the process in which the support component of the keyboard assembly rotates around the keyboard body, a rotation track of each support plate is unique. In this way, when the keyboard assembly is in the open state, coplanarity between the outer surface of the first support plate and the outer surface of the keyboard body can be improved, to improve appearance flatness of the keyboard assembly.

In this application, to enable the host of the electronic device to serve as a support mechanical part to form a stable triangular support structure with the keyboard assembly, a connection structure needs to be disposed between the host and the keyboard body, so that when the electronic device is in the open state, the host can provide a stable support force through a connection between the host and the keyboard body. In a specific implementation of this application, the host includes a third magnetic member, and the third magnetic member is located at an end part of the host. In addition, the keyboard body further includes a fourth magnetic member. The third magnetic member and the fourth magnetic member are attracted to each other when the electronic device is in the open state. In this way, the host is connected to the keyboard body in a magnetic attraction manner. This implementation is simple, and helps reduce design complexity of the electronic device.

In a possible implementation of this application, the keyboard body includes a plurality of fourth magnetic members that are sequentially disposed away from the support component. In this way, the third magnetic member of the host can be attracted to the fourth magnetic members at different disposing positions, so that the electronic device can be maintained at a corresponding opening angle. This helps adjust the electronic device at a plurality of angles in the open state, to meet use requirements of the user at different opening angles, thereby improving user experience.

In a possible implementation of this application, the keyboard assembly further includes a charging control circuit board, a connector, and a main circuit board. The charging control circuit board is disposed on the first support plate, and the main circuit board is disposed on the keyboard body. The charging control circuit board is configured to receive an external power supply, is configured to supply power to a battery of the host via the connector, and is configured to supply power to the main circuit board. This can increase space utilization of the keyboard assembly, and further help reduce a thickness of the keyboard body, to implement a design of thinness of the keyboard assembly.

In this application, the first support plate further includes a power supply interface, and the charging control circuit board receives the external power supply through the power supply interface. In this way, both a distance between the charging control circuit board and the power supply interface and a distance between the charging control circuit board and the main circuit board may be short, so that the charging control circuit board provides the external power supply received through the power supply interface for the host and the main circuit board.

In addition, in this application, the connector is disposed on the first support plate, the second support plate, or the third support plate, and the charging control circuit board is electrically connected to the connector through a flexible circuit board. This helps meet flowing of a high current between the charging control circuit board and the connector, thereby increasing a speed of charging the battery of the host by the charging control circuit board.

In another possible implementation of this application, the charging control circuit board includes a charging controller, and the main circuit board includes a mainboard processor. The charging controller is configured to transmit a received external power supply signal to the mainboard processor. The mainboard processor is configured to control, when the battery of the host is in a low battery level state, the charging controller to supply power to the battery of the host. In this application, a power supply circuit of the keyboard assembly is separately disposed on the charging control circuit board and the main circuit board, the charging control circuit board is disposed on the first support plate, and the main circuit board is disposed on the keyboard body. This helps increase internal space utilization of the keyboard assembly, and helps improve exquisiteness of the keyboard assembly.

According to a third aspect, this application further provides an electronic device. The electronic device includes a host and a keyboard assembly, the keyboard assembly includes a keyboard body, a first support plate, and a second support plate, the first support plate includes a first plate edge and a second plate edge that are disposed opposite to each other, the second support plate includes a third plate edge and a fourth plate edge that are disposed opposite to each other, the first plate edge is rotatably connected to the third plate edge, and the second plate edge is rotatably connected to an end part of the keyboard body. In addition, the host includes a support arm and a rear cover, and the support arm is rotatably connected to the rear cover. In this way, the fourth plate edge of the second support plate can be detachably connected to the support arm, to implement a rotatable connection between the second support plate and the support arm of the host. The keyboard assembly is rotatably connected to the host in the foregoing manner. This can help reduce a size of the second support plate, thereby reducing a weight of the keyboard assembly, and implementing a design of lightness of the electronic device.

In addition, in a possible implementation of this application, the second support plate is electrically connected to the keyboard body, and the second support plate is electrically connected to the support arm. In this way, the host can be electrically connected to the keyboard body while the second support plate is rotatably connected to the host. This helps improve an integrated design of the keyboard assembly.

According to a fourth aspect, this application further provides a keyboard assembly. The keyboard assembly includes a keyboard body, and the keyboard body includes a plurality of keys. In addition, the keyboard assembly further includes a support component, a first flexible material layer, a second flexible material layer, and an oil edge material layer. The support component is rotatably connected to the keyboard body, the support component includes a first attachment surface and a second attachment surface that are disposed back to back, and the first attachment surface is away from the keyboard body relative to the second attachment surface. In addition, the first attachment surface includes an inclined surface in a direction facing an edge of the second attachment surface. In this application, the first flexible material layer is attached to the first attachment surface, and the second flexible material layer is attached to the second attachment surface. The oil edge material layer covers edges of the first flexible material layer, the first attachment surface, the second flexible material layer, and the second attachment surface. Generation of an appearance parting line can be avoided by using the wrapping manner of the flexible material layer of the support component provided in this application, so that the keyboard assembly can have a smooth, simple, and integrated appearance surface, to improve appearance aesthetics of the keyboard assembly.

It should be noted that structures such as the keyboard body and the support component of the keyboard assembly provided in the fourth aspect may be disposed with reference to the keyboard assembly provided in the first aspect to the third aspect, or may be disposed in any other possible manner. This is not limited herein.

### BRIEF DESCRIPTION OF DRAWINGS

FIG. 1 is a diagram of an application scenario of a keyboard assembly according to an embodiment of this application;
FIG. 2 is an exploded view of an electronic device shown in FIG. 1;
FIG. 3 is a diagram of a structure of the electronic device shown in FIG. 1 in an open state;
FIG. 4 is an exploded view of the electronic device shown in FIG. 3;
FIG. 5 is an exploded view of a host of an electronic device according to embodiment of this application;
FIG. 6a is a simplified diagram of a structure of the electronic device shown in FIG. 3;
FIG. 6b is a simplified diagram of a structure of the electronic device shown in FIG. 6a from another angle;
FIG. 7 is a diagram of a structure of the electronic device shown in FIG. 1 opened to another angle;
FIG. 8 is a diagram of a structure of the electronic device shown in FIG. 1 opened to another angle;
FIG. 9 is a diagram of a structure of a first rotating module according to an embodiment of this application;
FIG. 10 is a diagram of a structure of a first hinge assembly according to an embodiment of this application;
FIG. 11 is an exploded view of the first hinge assembly shown in FIG. 10;
FIG. 12 is a diagram of a structure of a conjoined cam according to an embodiment of this application;
FIG. 13 is a diagram of a principle of a movement mechanism of a keyboard assembly with a first hinge assembly according to an embodiment of this application;
FIG. 14 is a diagram of another structure of a first hinge assembly according to an embodiment of this application;
FIG. 15 is a diagram of a structure of a connection member of the first hinge assembly shown in FIG. 14;
FIG. 16 is a diagram of another structure of a first hinge assembly according to an embodiment of this application;
FIG. 17 is a diagram of another structure of a first hinge assembly according to an embodiment of this application;
FIG. 18 is a diagram of an assembly relationship between a connection member and a first stopper and a second stopper of the first hinge assembly shown in FIG. 17;
FIG. 19 is a diagram of another structure of a first hinge assembly according to an embodiment of this application;
FIG. 20 is a diagram of an assembly relationship between a conjoined cam and a first cam member and a second cam member of the first hinge assembly shown in FIG. 19;
FIG. 21 is a diagram of another structure of a keyboard assembly according to an embodiment of this application;
FIG. 22 is an A-A sectional view of the keyboard assembly shown in FIG. 21;
FIG. 23 is a diagram of a principle of a movement mechanism of the keyboard assembly shown in FIG. 21;
FIG. 24 is a diagram of another structure of a keyboard assembly according to an embodiment of this application;
FIG. 25 is an enlarged view of a partial structure at a position B of the keyboard assembly shown in FIG. 24;
FIG. 26 is a diagram of another structure of a keyboard assembly according to an embodiment of this application;
FIG. 27 is an enlarged view of a partial structure at a position C of the keyboard assembly shown in FIG. 26;
FIG. 28a is an appearance effect diagram of a keyboard assembly formed by using a conventional process;
FIG. 28b is an enlarged view of a partial structure at a position G of the keyboard assembly shown in FIG. 28a;
FIG. 29a is an appearance effect diagram of a keyboard assembly according to an embodiment of this application;
FIG. 29b is an enlarged view of a partial structure at a position H of a structure shown in FIG. 29a;
FIG. 29c to FIG. 29e are flowcharts of a process for attaching a flexible material layer according to an embodiment of this application;
FIG. 30 is a diagram of a structure of a second rotating module according to an embodiment of this application;
FIG. 31a is a diagram of a structure of a second hinge assembly according to an embodiment of this application;
FIG. 31b is a diagram of a structure of a first rotating bracket according to an embodiment of this application;
FIG. 32a is a D-D sectional view of the second hinge assembly shown in FIG. 31a, and may show a structure of a first connection part;
FIG. 32b is an E-E sectional view of the second hinge assembly shown in FIG. 31a;
FIG. 32c is an F-direction view of the structure shown in FIG. 32a;
FIG. 33 is a sectional view of another assembly structure of a first rotating bracket and a second rotating bracket according to an embodiment of this application;
FIG. 34 is a diagram of another structure of a keyboard assembly according to an embodiment of this application;
FIG. 35a is a diagram of another structure of a keyboard assembly according to an embodiment of this application;
FIG. 35b is a diagram of a structure of an electronic device in which the keyboard assembly shown in FIG. 35a is used;
FIG. 36 is a diagram of another structure of a keyboard assembly according to an embodiment of this application;
FIG. 37 is a diagram of a structure in which a second support plate of the keyboard assembly shown in FIG. 36 is connected to a support arm;
FIG. 38 is a diagram of another structure of a keyboard assembly according to an embodiment of this application; and
FIG. 39 is a diagram of a topology structure of a power supply system of an electronic device according to an embodiment of this application.

### Reference numerals:

1000: keyboard assembly; 11: keyboard body; 1101: key; 1102: touch panel; 1103: fourth magnetic member; 1104: first pen slot;
1105: main circuit board; 11051: mainboard processor;
12: support component; 1201: first support plate; 12011: first plate edge; 12012: second plate edge; 12013: second pen slot;
12014: first surface; 120141: inclined surface; 12015: second surface; 12016: charging control circuit board; 120161: charging controller;
120162: overvoltage protection load switch; 12017: connector; 12018: power supply interface; 12019: flexible circuit board;
1202: second support plate; 12021: third plate edge; 12022: fourth plate edge; 1203: third support plate; 12031: fifth plate edge;
12032: second magnetic member;
13: first rotating module; 1301: first hinge assembly; 13011: first shaft; 130111: first slot; 130112: first spiral surface;
13012: second shaft; 130121: second slot; 130122: second spiral surface; 13013: first fastening bracket; 130131: first insertion part;
13014: second fastening bracket; 130141: second insertion part;
1312: connection member; 13121: first stop part; 13122: third stop part; 13123: fifth cam surface;
131231: fifth depression part; 131232: sixth depression part; 131233: third protrusion part; 131234: fifth slope;
131235: sixth slope; 13124: seventh cam surface;
1313: first stopper; 13131: second stop part; 13132: sixth cam surface;
1314: second stopper; 13141: fourth stop part; 13142: eighth cam surface;
13015: conjoined cam; 130151: first cam surface; 1301511: first depression part; 1301512: second depression part;
1301513: first protrusion part; 1301514: first slope; 1301515: second slope; 130152: third cam surface;
13016: first cam member; 130161: second cam surface;
13017: second cam member; 130171: fourth cam surface;
13018: first elastic component; 13019: second elastic component;
13020: connection member; 13021: first nut; 13022: second nut; 13023: washer; 13024: idler gear; 13025: first buckle;
13026: second buckle; 13027: connection member; 130271: fifth stop part; 130272: sixth stop part; 13028: first hinge;
1302: main shaft; 130201: main inner shaft; 130202: main outer shaft;
14: second rotating module; 1401: second hinge; 1402: second hinge assembly; 14021: first rotating bracket;
140211: first connection plate; 140212: first connection arm; 1402121: first connection part; 14021211: shaft hole;
1402122: first arc-shaped rotating part; 14022: second rotating bracket; 140221: second connection plate; 140222: second connection arm;
1402221: second connection part; 1402222: second arc-shaped rotating part;
15: stylus;
2000: host; 21: front cover; 2101: display; 22: middle frame; 23: rear cover; 2301: mounting groove; 24: first magnetic member;
25: third magnetic member; 26: support arm; 271: first flexible material layer; 272: second flexible material layer; 28: oil edge; 29: appearance parting line;
210: auxiliary processor of the host; 211: battery; 212: power manager; and 3: cable.

### DESCRIPTION OF EMBODIMENTS

To make objectives, technical solutions, and advantages of this application clearer, the following further describes this application in detail with reference to accompanying drawings. However, example implementations can be implemented in a plurality of forms, and should not be construed as being limited to implementations described herein. Identical reference numerals in the figure denote identical or similar structures. Therefore, repeated descriptions thereof are omitted. Words that express positions and directions in embodiments of this application are described by using the accompanying drawings as an example. However, changes may also be made as required, and all the changes fall within the protection scope of this application. The accompanying drawings in embodiments of this application are merely used to illustrate relative position relationships and do not represent an actual scale.

It should be noted that specific details are set forth in the following descriptions for ease of understanding this application. However, this application can be implemented in a plurality of manners different from those described herein, and a person skilled in the art can perform similar promotion without departing from the connotation of this application. Therefore, this application is not limited to the specific implementations disclosed below.

For ease of understanding a keyboard assembly provided in this application, the following first describes an application scenario of the keyboard assembly. The keyboard assembly provided in embodiments of this application may be used in, but is not limited to, a mobile phone, a calculator, a tablet computer or a personal digital assistant (personal digital assistant, PDA) used for light office, and the like.

As a main input device in application scenarios such as office and games, the keyboard assembly may further support a host of an electronic device while providing an input function. When the electronic device that uses the keyboard assembly to provide a support function is opened to a use state, the keyboard assembly may form a triangular support region, and a center of gravity of the host of the electronic device falls within the triangular support region, so that the keyboard assembly supports the host of the electronic device.

Currently, to meet a requirement for smoothly opening the electronic device and a support requirement of the electronic device in an open state, a structure of the keyboard assembly is usually complex. Consequently, the keyboard assembly has a large weight and size, this affects a weight and a size of an entire electronic device in which the keyboard assembly is used, and it is difficult to adapt to a current development trend of lightness, thinness, and miniaturization of the electronic device.

In view of this, the keyboard assembly provided in this application can provide, while meeting the requirement for smoothly opening the electronic device, reliable support for the host of the electronic device through multi-rod movement when the electronic device is in an open state. The keyboard assembly has a simple structure. This helps implement a design of miniaturization of the keyboard assembly, and further meets design requirements for lightness, thinness, and miniaturization of the electronic device, thereby meeting a portability requirement of a user, and improving user experience. For ease of understanding the keyboard assembly provided in this application, the following describes the keyboard assembly in detail with reference to specific embodiments.

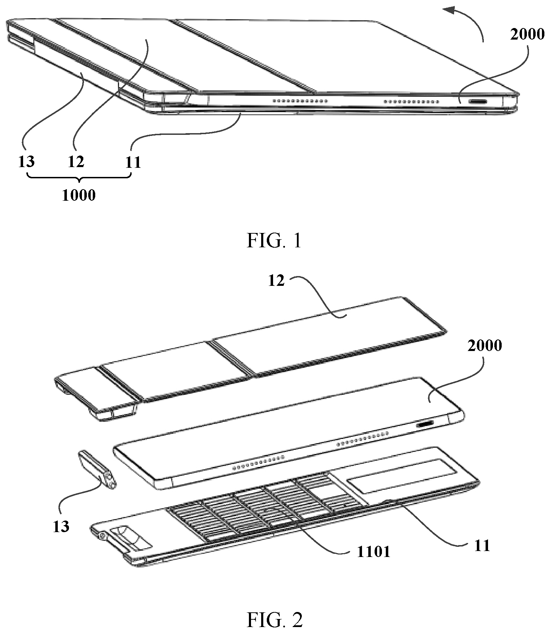

FIG. 1 is a diagram of an application scenario of a keyboard assembly according to an embodiment of this application. This embodiment shows a structure of an electronic device in which the keyboard assembly 1000 is used and that is in a closed state. The electronic device includes the keyboard assembly 1000 and a host 2000. The keyboard assembly 1000 includes a keyboard body 11 and a support component 12. In the closed state shown in FIG. 1, the keyboard body 11 and the support component 12 are disposed opposite to each other, and the host is located between the keyboard body 11 and the support component 12.

FIG. 2 is an exploded view of the electronic device shown in FIG. 1. The keyboard body 11 includes a plurality of keys 1101, and a user may tap the keys 1101 to implement an input function of the keyboard assembly 1000. The support component 12 is connected to an end part of the keyboard body 11, and the support component 12 is rotatably connected to the end part of the keyboard body 11.

It may be understood that, when the electronic device is in the closed state shown in FIG. 1, the keyboard assembly 1000 may further protect the host 2000. When the electronic device needs to be used, the user may open the electronic device in an arrow direction shown in FIG. 1.

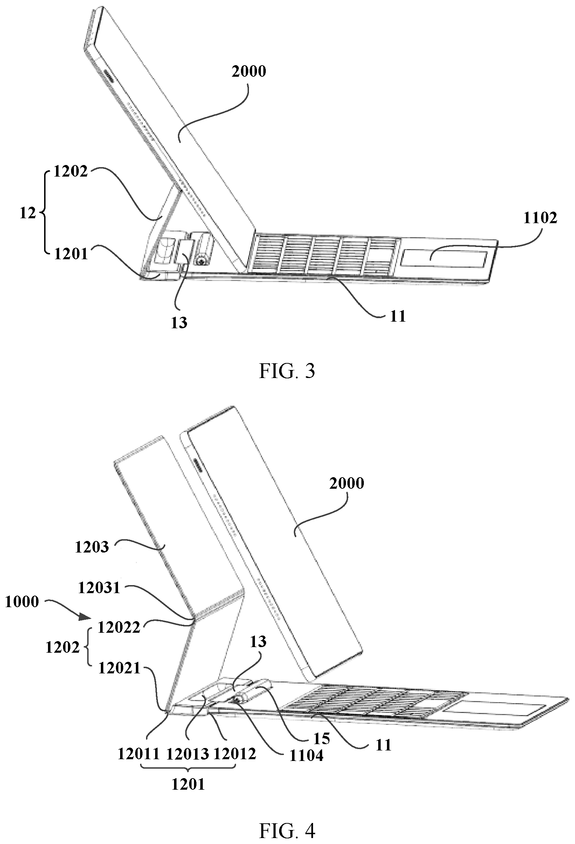

FIG. 3 is a diagram of a structure of the electronic device shown in FIG. 1 in an open state. In this application, the support component 12 may be connected to the host 2000 of the electronic device. In a process in which the electronic device changes from the closed state shown in FIG. 1 to the open state shown in FIG. 3, the host 2000 drives the support component 12 to rotate around the end part of the keyboard body 11, so as to implement back-to-back movement of the support component 12 and the keyboard body 11. When the electronic device is opened to a use state, the support component 12 can support the host 2000. In addition, a display of the host 2000 may be configured to display content input through the key 1101 of the keyboard body 11.

As shown in FIG. 3, the keyboard body 11 may further include a touch panel 1102, and the user may implement a touch operation on the electronic device through the touch panel 1102. In addition, a control circuit, a battery, or some sensors (for example, an infrared sensor, an ultrasonic sensor, or a fingerprint sensor) may be further disposed in the keyboard body 11. The control circuit may be disposed to provide a circuit control function for the keyboard body 11, and the sensor may be disposed to provide functions such as signal triggering. In addition, the battery in the keyboard body 11 may be configured to maintain a normal operating state of the keyboard body 11 when there is no external power supplying.

In this application, to implement a function of supporting the host 2000 by the keyboard assembly 1000, the support component 12 may include a plurality of support plates that are connected to each other. For example, refer to FIG. 4. FIG. 4 is an exploded view of the electronic device shown in FIG. 3. The support component 12 includes a first support plate 1201 and a second support plate 1202. The first support plate 1201 includes a first plate edge 12011 and a second plate edge 12012 that are disposed opposite to each other. The second support plate 1202 includes a third plate edge 12021. In this case, the first plate edge 12011 is rotatably connected to the third plate edge 12021, to implement a rotatable connection between the first support plate 1201 and the second support plate 1202. In addition, the second plate edge 12012 is rotatably connected to the end part of the keyboard body 11 to implement a rotatable connection between the first support plate 1201 and the keyboard body 11, so as to implement a rotatable connection between the support component 12 and the keyboard body 11.

The keyboard assembly 1000 provided in this embodiment of this application may further include a stylus 15. To facilitate accommodating the stylus 15, the keyboard body 11 is provided with a first pen slot 1104, and the stylus 15 may be accommodated in the first pen slot 1104. In addition, the first support plate 1201 may be further provided with a second pen slot 12013. In addition, when the keyboard assembly 1000 is in the closed state, the first pen slot 1104 and the second pen slot 12013 are disposed opposite to each other, so that the stylus 15 can be accommodated between the first pen slot 1104 and the second pen slot 12013. In this way, an accommodation requirement of the stylus 15 can be met while a design of thinness of the keyboard assembly 1000 is implemented.

Refer to both FIG. 3 and FIG. 4. In this embodiment of this application, the support component 12 may further include a third support plate 1203, and the second support plate 1202 is located between the third support plate 1203 and the first support plate 1201. The second support plate 1202 further includes a fourth plate edge 12022, and the fourth plate edge 12022 and the third plate edge 12021 are disposed opposite to each other. In addition, the third support plate 1203 includes a fifth plate edge 12031. In this case, the fifth plate edge 12031 is rotatably connected to the fourth plate edge 12022, to implement a rotatable connection between the second support plate 1202 and the third support plate 1203.

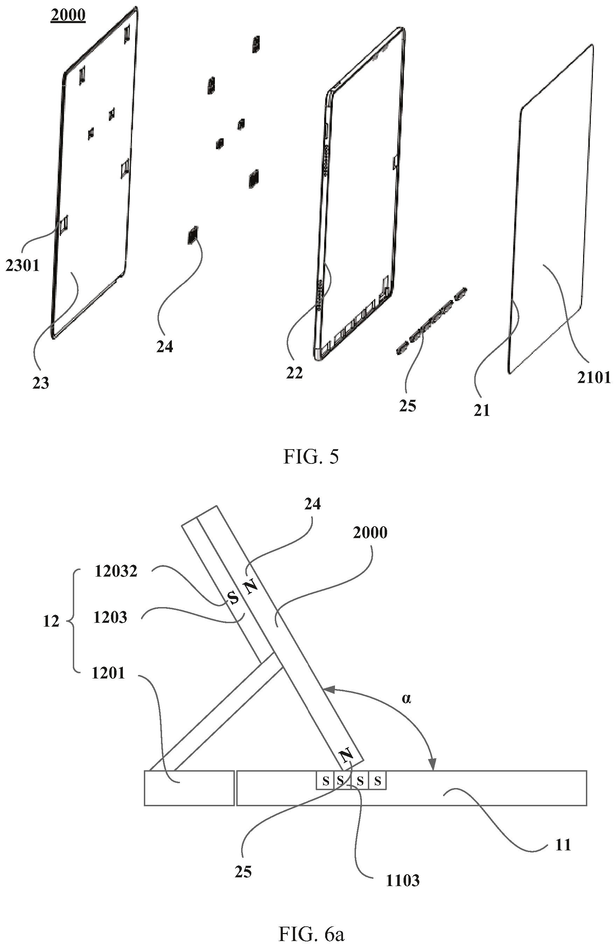

In this application, the third support plate 1203 may be configured to detachably connect to the host 2000. The third support plate 1203 may be connected to the host 2000 in a plurality of manners. For example, the third support plate 1203 may be connected to the host 2000 in a magnetic attraction manner. During specific implementation, refer to FIG. 5. FIG. 5 is an exploded view of the host 2000 of the electronic device according to an embodiment of this application. The host 2000 may include a front cover 21, a middle frame 22, and a rear cover 23. The front cover 21 includes a display 2101. The middle frame 22 is located between the front cover 21 and the rear cover 23. Both the front cover 21 and the rear cover 23 are fastened to the middle frame 22. In this case, all functional components of the host 2000 are packaged between the front cover 21 and the rear cover 23.

Still refer to FIG. 5. The host 2000 may include a first magnetic member 24. The first magnetic member 24 may be located between the rear cover 23 and the middle frame 22. The first magnetic member 24 may be disposed on the rear cover 23, or may be disposed on the middle frame 22. For example, in FIG. 5, if the rear cover 23 is provided with a mounting groove 2301, the first magnetic member 24 is mounted in the mounting groove 2301.

In addition, FIG. 6a is a simplified diagram of a structure of the electronic device shown in FIG. 3. A second magnetic member 12032 is further disposed on the third support plate 1203, and the second magnetic member 12032 is configured to be attracted to the first magnetic member 24, so that the third support plate 1203 and the rear cover 23 of the host 2000 are detachably connected to each other in a magnetic attraction manner.

In this application, specific types of the first magnetic member 24 and the second magnetic member 12032 are not limited. Each of the first magnetic member and the second magnetic member may be a mechanical part like a magnet that has magnetism, or may be a mechanical part that has no magnetism but can be attracted by a magnet. For example, the first magnetic member 24 is a magnet, and the second magnetic member 12032 is a magnet or a mechanical part having no magnetism, provided that a function of attraction between the first magnetic member 24 and the second magnetic member 12032 can be implemented.

It should be noted that, to improve reliability of attraction between the third support plate 1203 and the host 2000, in this embodiment of this application, the host 2000 may include a plurality of first magnetic members 24, the third support plate 1203 may include a plurality of second magnetic members 12032, and the plurality of first magnetic members 24 are attracted to the plurality of second magnetic members 12032 in a one-to-one correspondence. Alternatively, when a disposed area of a second magnetic member 12032 of the third support plate 1203 is large enough, the plurality of first magnetic members 24 may be attracted to the second magnetic member 12032.

The foregoing merely describes some examples of the manner of magnetic attraction between the third support plate 1203 and the host 2000 in this application. Based on this, some adaptive deformations may be further performed on a specific manner of implementing magnetic attraction between the third support plate and the host. Details are not described one by one herein, but it should be understood that they all fall within the protection scope of this application.

In addition, the third support plate 1203 and the host 2000 may be connected to each other in another possible manner in addition to the magnetic attraction manner. For example, if the third support plate 1203 may be provided with a slot that matches an outer contour of the host 2000, the host 2000 may be mounted in the slot, so that the third support plate 1203 and the host 2000 are detachably connected to each other in a clamping manner. In this embodiment of this application, the third support plate 1203 and the host 2000 may be detachably connected to each other in any other possible manner. Details are not described one by one herein, but it should be understood that they all fall within the protection scope of this application.

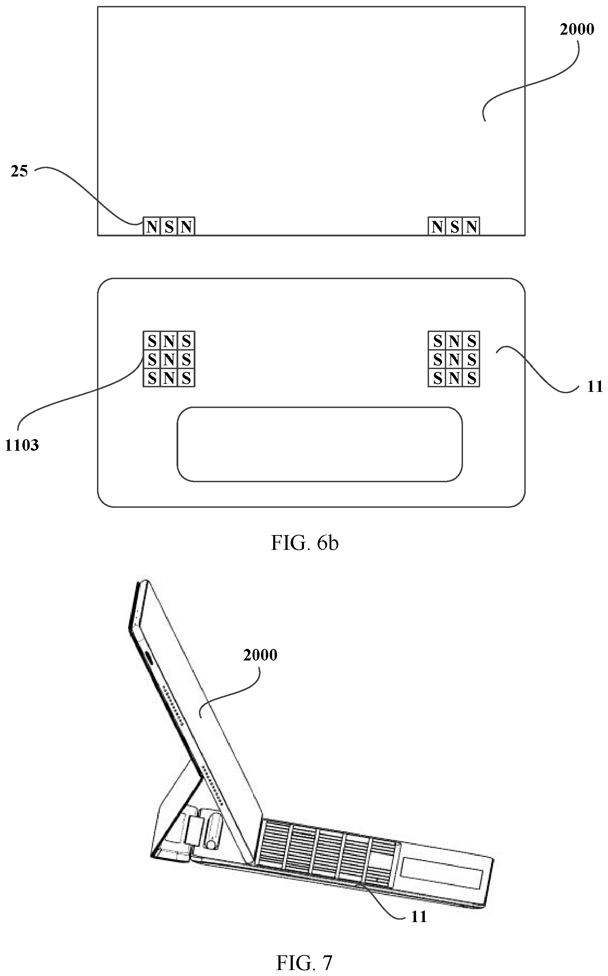

Still refer to FIG. 5. The host 2000 further includes a third magnetic member 25, and the third magnetic member 25 is located at an end part of the host 2000. In addition, FIG. 6b is a simplified diagram of a structure of the electronic device shown in FIG. 6a from another angle. The keyboard body 11 further includes a fourth magnetic member 1103, and the third magnetic member 25 and the fourth magnetic member 1103 are attracted to each other. In this way, when the electronic device is in the open state, the third magnetic member 25 and the fourth magnetic member 1103 are attracted to each other, and an outer surface that is of the first support plate 1201 and that is away from the host 2000 and an outer surface that is of the keyboard body 11 and that is away from the host are coplanar or approximately coplanar. In this case, a triangular support structure or an approximate triangular support structure is formed between the host 2000, the second support plate 1202, and a structure formed by connecting the first support plate 1201 to the keyboard body 11, and the host 2000 can stably maintain at this opening angle at the moment.

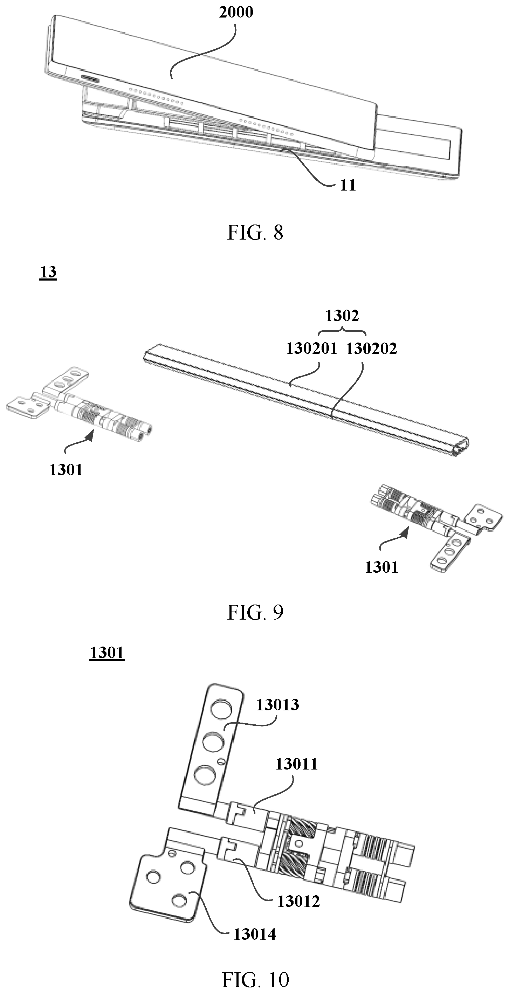

In this application, the opening angle of the electronic device may be understood as an included angle, away from the support component 12, between the host 2000 and the keyboard body 11, for example, an included angle α shown in FIG. 6a. It may be understood that, in this application, the angle at which the host 2000 in the open state maintains may be adjusted by adjusting a position at which the fourth magnetic member 1103 is disposed. Still refer to FIG. 6a and FIG. 6b. In this embodiment of this application, the keyboard body 11 may include a plurality of fourth magnetic members 1103 that are sequentially disposed along the first support plate 1201 that is away from the support component 12. In this way, a spacing between the plurality of fourth magnetic members 1103 may be adjusted, so that when the third magnetic member 25 of the host 2000 is attracted to the fourth magnetic members 1103 disposed at different positions on the keyboard body 11, the host 2000 can maintain at a corresponding opening angle. For example, in FIG. 3, the opening angle of the electronic device is 120°. For another example, in an electronic device shown in FIG. 7, the opening angle of the electronic device is 125°. For another example, in an electronic device shown in FIG. 8, the opening angle of the electronic device may be 175°, and the electronic device may be used in a scenario like handwriting, drawing, or reading. In this application, the host 2000 is connected to the keyboard body 11 in a magnetic attraction manner. This helps implement stepless adjustment of the opening angle of the host 2000, thereby meeting a use requirement of the user at different opening angles, improving user experience, and improving product competitiveness of the electronic device.

It may be understood that, in this embodiment of this application, in a process of opening the electronic device, the host 2000 drives the third support plate 1203 to rotate in a direction away from the keyboard body 11, the third support plate 1203 drives the second support plate 1202 to rotate in a direction away from the keyboard body 11, and the second support plate 1202 drives the first support plate to rotate in a direction away from the keyboard body 11. When the host 2000 is opened to a specified opening angle, the third magnetic member 25 of the host 2000 is attracted to the fourth magnetic member 1103 at a corresponding position of the keyboard body 11, so that the host 2000 can stably maintain at the corresponding opening angle. A process of closing the electronic device is an inverse process of the opening process. Details are not described herein again.

It may be understood from the foregoing description of the principle of supporting the host 2000 by the support component 12 of the keyboard assembly 1000 provided in this embodiment of this application and the processes of opening and closing the electronic device in which the keyboard assembly 1000 provided in this application is used that a movement track of each support plate of the support component 12 of the keyboard assembly 1000 plays a key role in whether the electronic device can be smoothly opened and whether the host 2000 can stably maintain at a specified opening angle. An implementation of rotation between the first support plate 1201 and the keyboard body 11 has important effect on rotation of the entire support component 12 relative to the keyboard body 11. In view of this, the following describes in detail an implementation of a rotatable connection between the first support plate 1201 and the keyboard body 11 of the keyboard assembly 1000 provided in this embodiment of this application with reference to a specific application scenario.

In this embodiment of this application, as shown in FIG. 1 to FIG. 4, the keyboard assembly 1000 further includes a first rotating module 13, the first support plate 1201 is rotatably connected to the first rotating module 13, and the keyboard body 11 is rotatably connected to the first rotating module 13, to implement the rotatable connection between the first support plate 1201 and the keyboard body 11. It may be understood that a process in which the first support plate 1201 and the keyboard body 11 rotate around the first rotating module 13 is a process in which the support component 12 and the keyboard body 11 move toward or away from each other.

When the first rotating module 13 is specifically disposed, refer to FIG. 9. FIG. 9 is a diagram of a structure of the first rotating module 13 according to an embodiment of this application. The first rotating module 13 includes a first hinge assembly 1301 and a main shaft 1302. The main shaft 1302 may serve as a bearing structure of the first hinge assembly 1301. The main shaft 1302 includes a main inner shaft 130201 and a main outer shaft 130202. The main inner shaft 130201 and the main outer shaft 130202 are disposed to form accommodation space, and a part of the first hinge assembly 1301 is mounted in the accommodation space between the main inner shaft 130201 and the main outer shaft 130202.

In this application, the first support plate 1201 and the keyboard body 11 may be rotatably connected to each other through the first hinge assembly 1301. To improve reliability of the rotatable connection between the first support plate 1201 and the keyboard body 11, the first rotating module 13 may include a plurality of first hinge assemblies 1301. For example, the first rotating module 13 shown in FIG. 9 includes two first hinge assemblies 1301, and in an axial direction of the first rotating module 13, the two first hinge assemblies 1301 are located on two opposite end parts of the main shaft 1302 respectively.

It may be understood that, in some other possible embodiments of this application, the first rotating module 13 may alternatively include only one first hinge assembly 1301. In this way, reliability of the rotatable connection between the first support plate 1201 and the keyboard body 11 through the first rotating module 13 can be ensured through a multi-point connection between the first hinge assembly 1301 and the first support plate 1201 and the keyboard body 11.

FIG. 10 is a diagram of a structure of the first hinge assembly 1301 according to an embodiment of this application. The first hinge assembly 1301 includes a first shaft 13011 and a second shaft 13012. In this application, an axis of the first shaft 13011 is parallel to and does not overlap an axis of the second shaft 13012, and an axial direction of the first shaft 13011 and an axial direction of the second shaft 13012 are the same as the axial direction of the first rotating module 13.

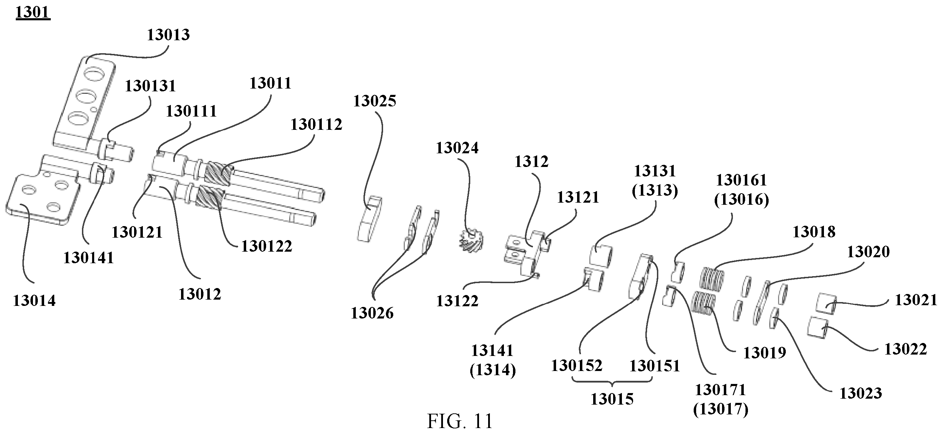

As shown in FIG. 10, the first hinge assembly 1301 further includes a first fastening bracket 13013 and a second fastening bracket 13014. The first fastening bracket 13013 is fastened to the first support plate, and the second fastening bracket 13014 is fastened to an end part of the keyboard body. In addition, the first fastening bracket 13013 may be disposed at an end part of the first shaft 13011, and the first fastening bracket 13013 is configured to drive the first shaft 13011 to rotate synchronously. Similarly, the second fastening bracket 13014 is disposed at an end part of the second shaft 13012, and the second fastening bracket 13014 is configured to drive the second shaft 13012 to rotate synchronously. During specific implementation, refer to FIG. 11. FIG. 11 is an exploded view of the first hinge assembly 1301 shown in FIG. 10. An end part that is of the first fastening bracket 13013 and that faces the first shaft 13011 includes a first insertion part 130131, the end part of the first shaft 13011 includes a first slot 130111, and the first insertion part 130131 is inserted into the first slot 130111, to limit relative movement of the first fastening bracket 13013 and the first shaft 13011 in a rotation direction in a clamping manner. Similarly, an end part that is of the second fastening bracket 13014 and that faces the second shaft 13012 includes a second insertion part 130141, the end part of the second shaft 13012 includes a second slot 130121, and the second insertion part 130141 is inserted into the second slot 130121, to limit relative movement of the second fastening bracket 13014 and the second shaft 13012 in a rotation direction in a clamping manner.

In this application, a relative position between the first fastening bracket 13013 and the first shaft 13011 and a relative position between the second fastening bracket 13014 and the second shaft 13012 in the rotation direction are fixed in the foregoing clamping manner. In a process of assembling the keyboard assembly, the first fastening bracket 13013 may be first fastened to the first support plate, the second fastening bracket 13014 is fastened to the keyboard body, and then, the first fastening bracket 13013 and the second fastening bracket 13014 are clamped to the corresponding shafts. This helps improve flexibility of assembling the first support plate and the keyboard body.

It should be noted that, in this application, a relative position between the first fastening bracket 13013 and the first shaft 13011 and a relative position between the second fastening bracket 13014 and the second shaft 13012 in the rotation direction may alternatively be fixed in another possible manner. For example, the first fastening bracket 13013 and the first shaft 13011 may be of an integrated structure, and the second fastening bracket 13014 and the second shaft 13012 may be of an integrated structure. This helps simplify a structure of the first hinge assembly 1301.

The foregoing merely describes some examples of a manner of a connection between the first fastening bracket 13013 and the first shaft 13011 and a manner of a connection between the second fastening bracket 13014 and the second shaft 13012 in this application. Based on this, the first fastening bracket 13013 may be connected to the first shaft 13011 in any other possible manner, and the second fastening bracket 13014 may be connected to the second shaft 13012 in any other possible manner. Details are not described one by one herein, but it should be understood that they all fall within the protection scope of this application.

In addition, as shown in FIG. 10 and FIG. 11, in this application, the first fastening bracket 13013 and the second fastening bracket 13014 may be located on a same side of an axial direction of the first hinge assembly 1301. This helps improve rotation stability of the first rotating assembly 1301.

Still refer to FIG. 11. The first hinge assembly 1301 may further include a connection member 1312. The connection member 1312 is sleeved on both the first shaft 13011 and the second shaft 13012. During specific implementation, the connection member 1312 includes a first shaft hole (not shown in FIG. 11) and a second shaft hole (not shown in FIG. 11). The first shaft 13011 penetrates the first shaft hole, and the second shaft 13012 penetrates the second shaft hole.

Still refer to FIG. 11. The first hinge assembly 1301 further includes a first stopper 1313 and a second stopper 1314. The connection member 1312 is located between the first fastening bracket 13013 and the first stopper 1313, and the connection member 1312 is located between the second fastening bracket 13014 and the second stopper 1314. The first stopper 1313 is sleeved on the first shaft 13011, and a relative position between the first stopper 1313 and the first shaft 13011 is fixed in a rotation direction of the first shaft 13011. An end part that is of the connection member 1312 and that faces the first stopper 1313 includes a first stop part 13121, an end part that is of the first stopper 1313 and that faces the connection member 1312 includes a second stop part 13131, and a side surface of the first stop part 13121 and a side surface of the second stop part 13131 are disposed opposite to each other in the rotation direction of the first shaft 13011.

Similarly, a fourth stop part 13141 is sleeved on the second shaft 13012, and a relative position between the fourth stopper 13014 and the second shaft 13012 is fixed in a rotation direction of the second shaft 13012. An end part that is of the connection member 1312 and that faces the fourth stopper 13014 includes a third stop part 13122, an end part that is of the fourth stopper 13014 and that faces the connection member 1312 includes a fourth stop part 13141, and a side surface of the third stop part 13122 and a side surface of the fourth stop part 13141 are disposed opposite to each other in the rotation direction of the second shaft 13012.

It may be understood that, in a rotating process of the first shaft 13011, when the side surface of the second stop part 13131 of the first stopper 1313 abuts against the side surface of the first stop part 13121 of the connection member 1312, the first shaft 13011 stops rotating; and in a rotating process of the second shaft 13012, when the side surface of the fourth stop part of the fourth stop part 13141 abuts against the side surface of the third stop part 13122 of the connection member 1312, the second shaft 13012 stops rotating.

It may be learned that, in this application, positions at which the first stop part 13121 and the third stop part 13122 of the connection member 1312, the second stop part 13131 of the first stopper 1313, and the fourth stop part of the fourth stop part 13141 are disposed may be adjusted, to adjust rotation angles of the first shaft 13011 and the second shaft 13012, so as to adjust a maximum angle of relative rotation between the first support plate 1201 and the keyboard body 11. For example, in this application, positions at which the first stop part 13121 and the third stop part 13122 of the connection member 1312, the second stop part 13131 of the first stopper 1313, and the fourth stop part of the fourth stop part 13141 are disposed may be adjusted, so that the maximum angle at which the first support plate 1201 rotates relative to the keyboard body 11 is 180°, and an outer surface of the first support plate 1201 and an outer surface of the keyboard body 11 are coplanar. This helps improve support stability of the triangular support structure formed by the support component 12.

It should be noted that, in an actual design, due to impact of a design tolerance, a production condition, and the like, the first rotating module 13 of the keyboard assembly 1000 uses the first hinge assembly 1301 described above in this application, a maximum angle at which the first support plate 1201 rotates relative to the keyboard body 11 may be approximately 180°. For example, the maximum angle may be 180°±5°. In other words, when the keyboard assembly 1000 is in an open state, an included angle, facing the key 1101, between an outer surface that is of the first support part 1201 and that is away from the key 1101 and an outer surface that is of the keyboard body 11 and that is away from the key 1101 is greater than or equal to 175° and less than or equal to 185°, so that the outer surface of the first support plate 1201 and the outer surface of the keyboard body 11 are approximately coplanar. This can meet a support reliability requirement of the support component 12 while reducing design difficulty of the first hinge assembly 1301.

Still refer to FIG. 11. The first hinge assembly 1301 further includes a conjoined cam 13015, the first stopper 1313 is located between the connection member 1312 and the conjoined cam 13015, and the fourth stop part 13141 is located between the connection member 1312 and the conjoined cam 13015. The conjoined cam 13015 is sleeved on both the first shaft 13011 and the second shaft 13012. In specific implementation, the conjoined cam 13015 includes a third shaft hole (not shown in FIG. 11) and a fourth shaft hole (not shown in FIG. 11). The first shaft 13011 penetrates the third shaft hole, and the second shaft 13012 penetrates the fourth shaft hole.

In addition, the first hinge assembly 1301 further includes a first cam member 13016 and a second cam member 13017. The conjoined cam 13015 is located between the first stopper 1313 and the first cam member 13016, and the conjoined cam 13015 is located between the second stopper 1314 and the second cam member 13017. The first cam member 13016 is sleeved on the first shaft 13011, and a relative position between the first cam member 13016 and the first shaft 13011 is fixed in the rotation direction of the first shaft 13011. The fourth cam member 13017 is sleeved on the second shaft 13012, and a relative position between the fourth cam member 13017 and the second shaft 13012 is fixed in the rotation direction of the second shaft 13012.

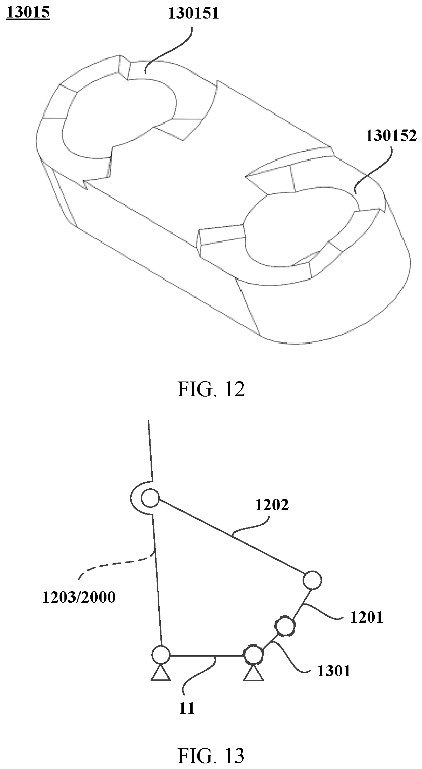

FIG. 12 is a diagram of a structure of the conjoined cam 13015 according to an embodiment of this application. Refer to both FIG. 11 and FIG. 12. An end part that is of the conjoined cam 13015 and that faces the first cam member 13016 includes a first cam surface 130151, and an end part that is of the conjoined cam 13015 and that faces the fourth cam surface 130171 includes a third cam surface 130152. In addition, an end part that is of the first cam member 13016 and that faces the conjoined cam 13015 includes a second cam surface 130161, and an end part that is of the fourth cam surface 130171 and that faces the conjoined cam 13015 includes a fourth cam surface.

In this application, a cam surface may include a protrusion part and a depression part, and there is a slope in a process of transitioning from the protrusion part to the depression part or from the depression part to the protrusion part. When a protrusion part of one of the two cam surfaces is located in a depression part of the other cam surface, a squeezing force between the two cam surfaces is small, and a damping force of relative movement between the two cam surfaces is small. When slopes of the two cam surfaces are in contact with each other, the squeezing force between the two cam surfaces is increased, and the damping force of the relative movement between the two cam surfaces is increased. It may be learned that when protrusion parts of the two cam surfaces are disposed opposite to each other, the squeezing force between the two cam surfaces is maximum, and the damping force of the relative movement between the two cam surfaces is maximum.

Based on this, in this embodiment of this application, as shown in FIG. 11, the first hinge assembly 1301 further includes a first elastic component 13018 and a second elastic component 13019, the first elastic component 13018 is sleeved on the first shaft 13011, and the first elastic component 13018 may provide an elastic action force in the axial direction of the first shaft 13011. The first cam member 13016 is located between the conjoined cam 13015 and the first elastic component 13018, and the first elastic component 13018 abuts against an end face that is of the first cam member 13016 and that is away from the conjoined cam 13015. In this case, under the elastic action force of the first elastic component 13018, the second cam surface 130161 of the first cam member 13016 abuts against the first cam surface 130151 of the conjoined cam 13015. In addition, the second elastic component 13019 is sleeved on the second shaft 13012, and the second elastic component 13019 may provide an elastic action force in the axial direction of the second shaft 13012. The fourth cam surface 130171 is located between the conjoined cam 13015 and the second elastic component 13019, and the second elastic component 13019 abuts against an end face that is of the fourth cam surface 130171 and that is away from the conjoined cam 13015. In this case, under the elastic action force of the second elastic component 13019, the fourth cam surface of the fourth cam surface 130171 abuts against the third cam surface 130152 of the conjoined cam 13015.

In this way, in a process in which the first support plate 1201 and the keyboard body 11 rotate back to back, a protrusion part of the first cam surface 130151 moves from a depression part of the second cam surface 130161 to a protrusion part of the second cam surface 130161, and a protrusion part of the third cam surface 130152 moves from a depression part of the fourth cam surface 130171 to a protrusion part of the fourth cam surface 130171. When the first support plate 1201 and the keyboard body 11 rotate back to back to a specified angle, the protrusion part of the first cam surface 130151 abuts against the protrusion part of the second cam surface 130161 when the side surface of the first stop part 13121 abuts against the side surface of the second stop part 13131; and the protrusion part of the third cam surface 130152 abuts against the protrusion part of the fourth cam surface 130171 when the side surface of the third stop part 13122 abuts against the side surface of the fourth stop part 13141.

In this embodiment of this application, specific types of disposing the first elastic component and the second elastic component are not limited. For example, each of the first elastic component and the second elastic component may be a spring plate component including a plurality of spring plates, or may be a spring, and may be specifically selected based on a requirement of the first hinge assembly 1301 for an elastic action force.

The first hinge assembly 1301 of the keyboard assembly 1000 provided in this application uses the foregoing design, so that the keyboard assembly 1000 can be smoothly opened, and the keyboard assembly 1000 can be stably maintained at a corresponding opening angle under a damping force when being opened to a tail end. Therefore, the electronic device in which the keyboard assembly 1000 provided in this application is used does not easily shake in the open state even if the electronic device is subject to a specific external impact force. This helps improve user experience, thereby improving product competitiveness. In addition, the first hinge assembly 1301 uses the foregoing design, so that a specific operation damping feeling is provided for the user in a process in which the user opens the electronic device, to improve user experience.

In addition to the foregoing structure, the first hinge assembly 1301 provided in this embodiment of this application may further include another possible structure. For example, still refer to FIG. 11. The first hinge assembly 1301 further includes a connection member 13020. The connection member 13020 is sleeved on both the first shaft 13011 and the second shaft 13012. During specific implementation, the connection member 13020 includes a fifth shaft hole and a sixth shaft hole. The first shaft 13011 penetrates the fifth shaft hole, and the second shaft 13012 penetrates the sixth shaft hole. This can help improve structure reliability of the first hinge assembly 1301 and help improve rotation stability of the first shaft 13011 and the second shaft 13012.

In addition, as shown in FIG. 11, the first elastic component 13018 may be located between the first cam member 13016 and the connection member 13020, and the first elastic component 13018 separately abuts against the first cam member 13016 and the connection member 13020. The second elastic component 13019 may be located between the second cam member 13017 and the connection member 13020, and the second elastic component 13019 separately abuts against the second cam member 13017 and the connection member 13020. In this way, the first elastic component 13018 and the second elastic component 13019 may be pressed toward the corresponding cam members through the connection member 13020. This helps improve consistency of elastic action forces generated by the first elastic component 13018 and the second elastic component 13019, thereby improving rotation stability of the first shaft 13011 and the second shaft 13012 of the first hinge assembly 1301.

It may be understood that, in the first hinge assembly 1301 shown in FIG. 11, because the first elastic component 13018 is located on a side that is of the first stopper 1313 and that is away from the connection member 1312, and the first elastic component 13018 is also located between the first stopper 1313 and the connection member 13020, the first elastic component 13018 can press the first stopper 1313 toward the connection member 1312. In addition, because the second elastic component 13019 is located on a side that is of the second stopper 1314 and that is away from the connection member 1312, and the second elastic component 13019 is also located between the second stopper 1314 and the connection member 13020, the second elastic component 13019 can press the second stopper 1314 toward the connection member 1312. Therefore, it may be understood that, in the first hinge assembly 1301, adjacent parts disposed on the first shaft 13011 abut against each other, and adjacent parts disposed on the second shaft 13012 abut against each other. This helps improve structure compactness of the first hinge assembly 1301.

To prevent the parts mounted on the first shaft 13011 and the second shaft 13012 from falling off, in this application, the first hinge assembly 1301 may further include a first nut 13021 and a second nut 13022. An end part that is of the first shaft 13011 and that is away from the first fastening bracket 13013 has an external thread, and the first nut 13021 is screwed with the external thread of the first shaft 13011, to implement a threaded connection between the first nut 13021 and the end part that is of the first shaft 13011 and that is away from the first fastening bracket 13013. In this way, the first elastic component 13018 can further be squeezed while each structure mounted on the first shaft 13011 is limited through the first nut 13021, so that the first elastic component 13018 accumulates the elastic action force in the axial direction of the first shaft 13011.

Similarly, if an end part that is of the second shaft 13012 and that is away from the second fastening bracket 13014 has an external thread, and the second nut 13022 is screwed with the external thread of the second shaft 13012, to implement a thread connection between the second nut 13022 and the end part that is of the second shaft 13012 and that is away from the second fastening bracket 13014. In this way, the second elastic component 13019 can further be squeezed while each structure mounted on the second shaft 13012 is limited through the second nut 13022, so that the second elastic component 13019 accumulates the elastic action force in the axial direction of the second shaft 13012.

As shown in FIG. 11, in the first hinge assembly 1301 provided in this application, washers 13023 may also be disposed between the connection member 13020 and the first elastic component 13018, and between the connection member 13020 and the first nut 13021, to reduce a risk of axial shaking of each structure mounted on the first shaft 13011, thereby improving rotation stability of the first shaft 13011. Similarly, washers 13023 may also be disposed between the connection member 13020 and the second elastic component 13019 and between the connection member 13020 and the second nut 13022, to reduce a risk of axial shaking of each structure mounted on the second shaft 13012, thereby improving rotation stability of the first shaft 13011. It may be understood that a thickness of the washer 13023 may be specifically selected based on a length of each shaft and a length of another mechanical part mounted on the shaft.

It should be noted that, in this application, in addition to the first nut 13021 and the second nut 13022 as limiting mechanical parts, the first hinge assembly 1301 may further use a snap ring as a limiting mechanical part. The snap ring may be clamped on both the first shaft 13011 and the second shaft 13012, to improve structure reliability of the first hinge assembly 1301 while implementing a limiting function on each structure mounted on the first shaft 13011 and the second shaft 13012. Certainly, the first hinge assembly 1301 may alternatively be disposed in another possible manner to implement a limiting function. Details are not listed one by one herein, but it should be understood that they all fall within the protection scope of this application.

Still refer to FIG. 11. The first shaft 13011 further includes a first spiral surface 130112, the second shaft 13012 further includes a second spiral surface 130122, and the first spiral surface 130112 and the second spiral surface 130122 have a same rotation direction. The first hinge assembly 1301 further includes an idler gear 13024. Refer to both FIG. 10 and FIG. 11. The idler gear 13024 is located between the first spiral surface 130112 and the second spiral surface 130122, the first spiral surface 130112 is engaged with a gear surface of the idler gear 13024, and the second spiral surface 130122 is engaged with the gear surface of the idler gear 13024. In this way, the first shaft 13011 and the second shaft 13012 can synchronously rotate reversely. This helps improve rotation stability of the first shaft 13011 and the second shaft 13012, thereby improving stability of relative rotation between the first support plate 1201 and the keyboard body 11.

In addition, in this application, the first spiral surface 130112 is located on a side that is of the connection member 1312 and that faces the first fastening bracket 13013, and the second spiral surface 130122 is located on a side that is of the connection member 1312 and that faces the second fastening bracket 13014. In addition, a hinge of the idler gear 13024 may be mounted on the connection member 1312. This helps improve structure reliability of the first hinge assembly 1301 and can make the structure of the first hinge assembly 1301 compact, thereby helping implement a design of miniaturization of the first hinge assembly 1301.

Still refer to FIG. 10 and FIG. 11. The first hinge assembly 1301 may further include a first buckle 13025 and a second buckle 13026. The first buckle 13025 and the second buckle 13026 may be used as appearance parts of the first hinge assembly 1301, and materials of the first buckle and the second buckle may be but are not limited to rubber, plastic, or the like. The first buckle 13025 and the second buckle 13026 may be clamped at any position in the axial direction of the first shaft 13011 and the second shaft 13012, to improve appearance integrity of the first hinge assembly 1301. In this application, the first buckle 13025 and the second buckle 13026 may be of a conjoined structure. To be specific, the first buckle 13025 may be clamped on both the first shaft 13011 and the second shaft 13012, and the second buckle 13026 may also be clamped on both the first shaft 13011 and the second shaft 13012. This helps improve appearance aesthetics of the first hinge assembly 1301. Certainly, the first buckle 13025 and the second buckle 13026 may alternatively be of a split structure. This helps improve flexibility of disposing the first buckle 13025 and the second buckle 13026.

FIG. 13 is a diagram of a principle of a movement mechanism of the keyboard assembly 1000 in which the first hinge assembly 1301 provided in the foregoing embodiment of this application is used. It may be seen from FIG. 13 that, movement of the support component 12 of the keyboard assembly 1000 around the keyboard body 11 may be equivalent to five-rod transmission. Each of the first support plate 1201, the second support plate 1202, the third support plate 1203 and the host 2000, the first hinge assembly 1301, and the keyboard body 11 may be considered as one rod. A movement pair between the first support plate 1201 and the first hinge assembly 1301, a movement pair between the second support plate 1202 and the first support plate 1201, a movement pair between the second support plate 1202 and the third support plate 1203 and the host 2000 as a whole, and a movement pair between the first hinge assembly 1301 and the keyboard body 11 are all low pairs. In other words, the five-rod transmission mechanism includes four low pairs. In addition, in a process in which the support component 12 rotates around the keyboard body 11, the first shaft 13011 and the second shaft 13012 of the first hinge assembly 1301 may further rotate as a whole around the keyboard body 11 with the support component 12 while rotating around axes of the first shaft and the second shaft. In this case, the first hinge assembly 1301 may be considered as a high-pair movement member.

Therefore, a degree of freedom of the five-rod transmission mechanism is 3×4-2×5-1=1. Therefore, it may be understood that the degree of freedom of the five-rod transmission mechanism is unique, that is, a movement track of each rod of the five-rod transmission mechanism is unique. In the process in which the support component 12 of the keyboard assembly 1000 rotates around the keyboard body 11, rotation tracks of each support plate and the first hinge assembly 1301 are unique. In this way, when the electronic device is in the open state, coplanarity between the outer surface of the first support plate 1201 and the outer surface of the keyboard body 11 can be improved, to improve appearance flatness of the keyboard assembly 1000. In addition, when the keyboard assembly 1000 is in the closed state, there is no protruding structure on a side edge of the keyboard assembly 1000, and the appearance flatness of the keyboard assembly 1000 is high. Therefore, the first rotating module 13 of the keyboard assembly 1000 provided in this application uses the first hinge assembly 1301 provided in the foregoing embodiment. This can help improve appearance simplicity of the keyboard assembly 1000.

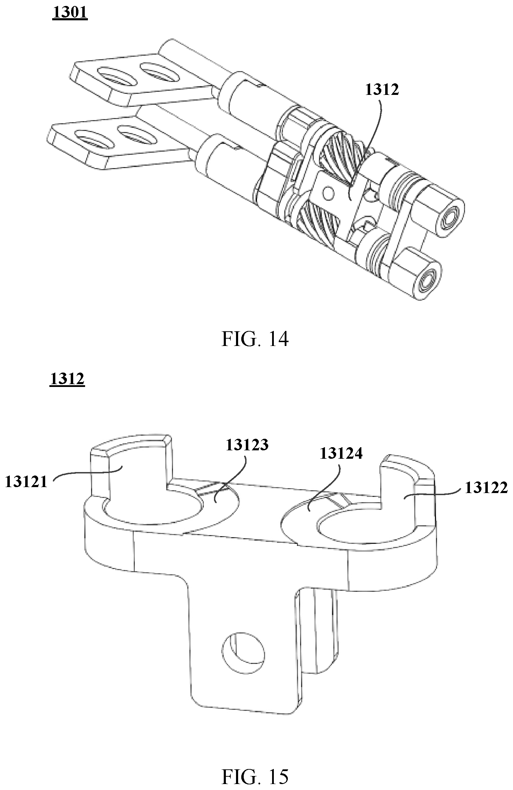

FIG. 14 is a diagram of another structure of the first hinge assembly 1301 according to an embodiment of this application. A structure of the connection member 1312 of the first hinge assembly 1301 shown in FIG. 14 is slightly different from a structure of the connection member 1312 of the first hinge assembly 1301 shown in FIG. 11. Specifically, refer to FIG. 15. FIG. 15 is a diagram of a structure of the connection member 1312 of the first hinge assembly 1301 shown in FIG. 14. In addition to the first stop part 13121, the end part that is of the connection member 1312 and that faces the first stopper 1313 further includes a fifth cam surface 13123, and a surface of a protrusion part of the fifth cam surface 13123 is connected to the first stop part 13121. In addition, the end part that is of the connection member 1312 and that faces the second stopper 1314 further includes the third stop part 13122 and a seventh cam surface 13124.

Correspondingly, the end part that is of the first stopper 1313 and that faces the connection member 1312 includes the second stop part 13131 and a sixth cam surface (not shown in FIG. 14), and the end part that is of the second stopper 1314 and that faces the connection member 1312 includes the fourth stop part 13141 and an eighth cam surface (not shown in FIG. 14). In this way, under the elastic action force of the first elastic component 13018, the fifth cam surface 13123 abuts against the sixth cam surface, and under the elastic action force of the second elastic component 13019, the seventh cam surface 13124 abuts against the eighth cam surface.

It may be understood that, in the first hinge assembly 1301 shown in FIG. 14, mechanical parts such as the conjoined cam 13015, the first cam member 13016, and the second cam member 13017 may be omitted. This can help simplify a structure of the first hinge assembly 1301, and reduce a weight of the first hinge assembly 1301, thereby helping implement a design of lightness and thinness of the keyboard assembly.

In addition, other structures of the first hinge assembly 1301 shown in FIG. 14 may be disposed with reference to any one of the foregoing embodiments. Details are not described herein again.

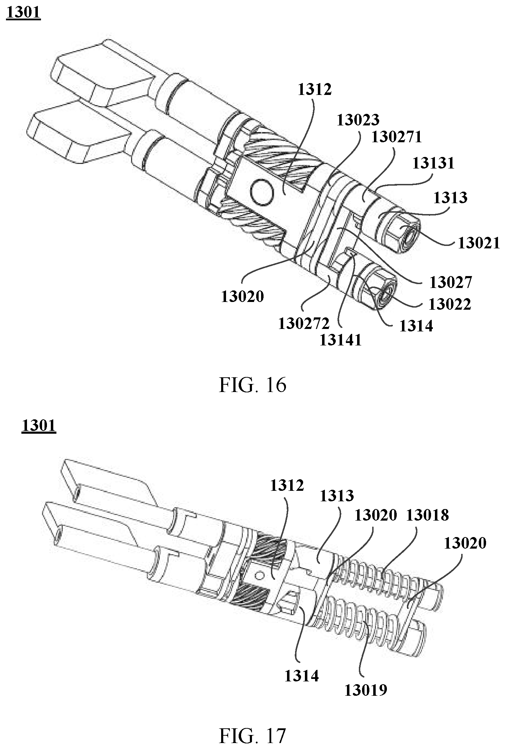

In some application scenarios, for example, when a center of gravity of the host 2000 of the electronic device is stable, the host 2000 is light, or a size of the first support plate 1201 is large enough, and when the electronic device is in the open state, a triangular support structure formed between the keyboard assembly 1000 and the host 2000 may meet a stable support requirement of the host 2000. In this case, the first hinge assembly 1301 may not be provided with a mechanical part that generates a damping force, so that the structure of the first hinge assembly 1301 is further simplified. For example, refer to FIG. 16. FIG. 16 is a diagram of another structure of the first hinge assembly 1301 according to an embodiment of this application. Compared with the first hinge assembly 1301 shown in FIG. 10, the first hinge assembly 1301 shown in FIG. 16 is not provided with a mechanical part that provides a damping force, for example, the conjoined cam 13015, the first cam member 13016, the second cam member 13017, the first elastic component 13018, and the second elastic component 13019, to simplify the structure of the first hinge assembly 1301.

In addition, in FIG. 16, the first hinge assembly 1301 further includes a connection member 13027. The connection member 13027 is sleeved on both the first shaft 13011 and the second shaft 13012. Specifically, the connection member 13027 includes a seventh shaft hole (not shown in FIG. 16) and an eighth shaft hole (not shown in FIG. 16). The first shaft 13011 penetrates the seventh shaft hole, and the second shaft 13012 penetrates the eighth shaft hole. In addition, the connection member 13027 is located between the connection member 1312 and the first stopper 1313, and the connection member 13027 is located between the connection member 1312 and the second stopper 1314. A fifth stop part 130271 is disposed at an end part that is of the connection member 13027 and that faces the first stopper 1313, and the second stop part 13131 is disposed at an end part that is of the first stopper 1313 and that faces the connection member 13027. A sixth stop part 130272 is disposed at an end part that is of the connection member 13027 and that faces the second stopper 1314, and the fourth stop part 13141 is disposed at an end part that is of the second stopper 1314 and that faces the connection member 13027. The fifth stop part 130271 may be disposed with reference to the first stop part 13121, and the sixth stop part 130272 may be disposed with reference to the third stop part 13122. Details are not described herein again.

In the first hinge assembly 1301 shown in FIG. 16, the first stop part 13121 and the third stop part 13122 are not disposed on the connection member 1312. However, other structures of the connection member 1312 may be disposed with reference to any one of the foregoing embodiments. Details are not described herein again.

Still refer to FIG. 16. In the first hinge assembly 1301, the connection member 13020 is located between the connection member 1312 and the connection member 13027, and washers 13023 are further disposed between the connection member 13020 and the connection member 1312, and between the connection member 13020 and the connection member 13027. In some possible embodiments of this application, the connection member 13027 may alternatively be located between the connection member 1312 and the connection member 13020. In this case, washers 13023 may be disposed between the connection member 1312 and the connection member 13027, between the connection member 13020 and the first stopper 1313 and the second stopper 1314, and between the connection member 13020 and the first nut 13021 and the second nut 13022. Certainly, in the first hinge assembly 1301, a position at which each structure is disposed may be adaptively adjusted when each structure can implement a function thereof. Details are not listed one by one herein, but it should be understood that they all fall within the protection scope of this application.

Other structures of the first hinge assembly 1301 shown in FIG. 16 may be disposed with reference to any one of the foregoing embodiments. Details are not described herein again. In addition, based on the structure of the first hinge assembly 1301 shown in FIG. 16, in some possible embodiments of this application, the connection member 1312 and the connection member 13027 may alternatively be integrated into an integrated structure. In other words, the connection member 1312 is still disposed in the manner shown in FIG. 11, and the connection member 13027 is omitted. This helps further simplify the structure of the first hinge assembly 1301.

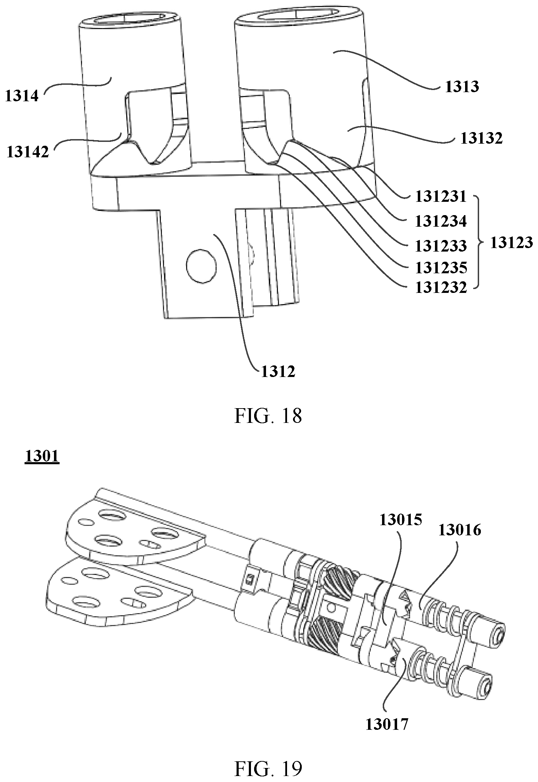

Based on the foregoing description of the design principle of the first hinge assembly 1301 provided in this application, a series of deformations may be further performed on a specific structure of the first hinge assembly 1301 based on a specific application scenario. For example, refer to FIG. 17. FIG. 17 is a diagram of another structure of the first hinge assembly 1301 according to an embodiment of this application. The first hinge assembly 1301 in FIG. 17 is similar to the first hinge assembly 1301 shown in FIG. 14, and a difference lies in a design of the connection member 1312 of the first hinge assembly 1301. Specifically, refer to FIG. 18. FIG. 18 is a diagram of an assembly relationship between the connection member 1312 and the first stopper 1313 and the second stopper 1314 of the first hinge assembly 1301 shown in FIG. 17. The fifth cam surface 13123 of the connection member 1312 includes a fifth depression part 131231, a sixth depression part 131232, and a third protrusion part 131233. The third protrusion part 131233 is located between the fifth depression part 131231 and the sixth depression part 131232. A gradient of a fifth slope 131234 extending from a surface of the third protrusion part 131233 to the fifth depression part 131231 is less than a gradient of a sixth slope 131235 extending from the surface of the third protrusion part 131233 to the sixth depression part 131232. In addition, in the first hinge assembly 1301 shown in FIG. 17, the surface of the third protrusion part 131233 is an arc-shaped surface.

FIG. 17 shows a structural status of the first hinge assembly 1301 in a case in which the keyboard assembly 1000 is in a closed state. In this case, still refer to FIG. 18. In the closed state, a protrusion part of the sixth cam surface 13132 of the first stopper 1313 is located in the fifth depression part 131231. In a process of opening the keyboard assembly 1000, the first support plate 1201 and the keyboard body 11 rotate back to back, and the protrusion part of the sixth cam surface 13132 moves from the fifth depression part 131231 to the sixth depression part 131232. Specifically, the protrusion part of the sixth cam surface 13132 first moves along the fifth slope 131234 toward the third protrusion part 131233. When the protrusion part of the sixth cam surface 13132 moves to the surface of the third protrusion part 131233, due to existence of a damping force, even if no opening force is exerted, the protrusion part of the sixth cam surface 13132 may also continue to move toward the sixth depression part 131232 under the damping force. When a side surface of the first stop part 13121 abuts against a side surface of the second stop part 13131, the protrusion part of the sixth cam surface 13132 is located in the sixth depression part 131232. In this case, the first support plate 1201 and the keyboard body 11 may be locked at this opening angle when there is no external action force. This can effectively improve support reliability of the keyboard assembly 1000. In this way, when the electronic device in which the keyboard assembly 1000 is used is in an open use state, even if a weight of the host 2000 is large, a size of the first support plate 1201 is small, or a tap operation is performed on the host 2000 of the electronic device, the electronic device can be stably maintained at the opening angle. This can effectively improve user experience.

In this embodiment of this application, the seventh cam surface 13124 of the connection member 1312 may be disposed with reference to the fifth cam surface 13123, and the second stopper 1314 may be disposed with reference to the first stopper 1313. In other words, the seventh cam surface 13124 includes a seventh depression part, an eighth depression part, and a fourth protrusion part. The fourth protrusion part is located between the seventh depression part and the eighth depression part, and a surface of the fourth protrusion part is also an arc-shaped surface. In addition, a gradient of a seventh slope extending from a surface of the fourth protrusion part to the seventh depression part is less than a gradient of an eighth slope extending from the surface of the seventh protrusion part to the eighth depression part. In this way, when the first support plate 1201 and the keyboard body 11 are in the closed state, a protrusion part of the eighth cam surface 13142 of the second stopper 1314 is located in the seventh depression part. However, in a process in which the first support plate 1201 and the keyboard body 11 rotate back to back, the protrusion part of the eighth cam surface 13142 moves from the seventh depression part to the eighth depression part. When a side surface of the third stop part 13122 abuts against a side surface of the fourth stop part 13141, the protrusion part of the eighth cam surface 13142 is located in the eighth depression part.

Still refer to FIG. 17. In the first hinge assembly 1301, to ensure smoothness of climbing movement of the protrusion part of the sixth cam surface 13132 of the first stopper 1313 along the fifth slope 131234, the first elastic component 13018 may be a spring. In addition, the second elastic component 13019 may also be a spring, to ensure smoothness of climbing movement of the protrusion part of the eighth cam surface of the second stopper 1314 along the seventh slope.

In the first hinge assembly 1301 shown in FIG. 17, there may be two connection members 13020, the first elastic component 13018 is located between the two connection members 13020, and the second elastic component 13019 is located between the two connection members 13020. This can help improve consistency of elastic forces exerted by the first elastic component 13018 and the second elastic component 13019 on corresponding stoppers, thereby improving rotation stability of the first shaft 13011 and the second shaft 13012, and further improving stability of rotation of the first support plate 1201 relative to the keyboard body 11.

In addition, other structures of the first hinge assembly 1301 shown in FIG. 17 may be disposed with reference to any one of the foregoing embodiments. Details are not described herein again.

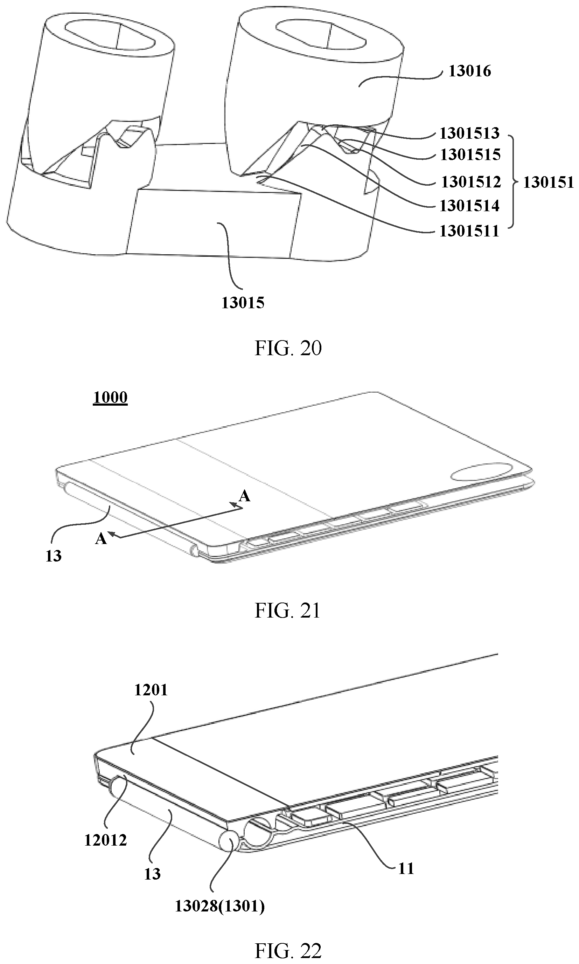

FIG. 19 is a diagram of another structure of the first hinge assembly 1301 according to an embodiment of this application. The first hinge assembly 1301 in FIG. 19 is similar to the first hinge assembly 1301 shown in FIG. 10, and a difference lies in a design manner of the conjoined cam 13015 of the first hinge assembly 1301. Specifically, refer to FIG. 20. FIG. 20 is a diagram of an assembly relationship between the conjoined cam 13015 and the first cam member 13016 and the second cam member 13017 of the first hinge assembly 1301 shown in FIG. 19. The first cam surface 130151 of the conjoined cam 13015 includes a first depression part 1301511, a second depression part 1301512, and a first protrusion part 1301513 located between the first depression part 1301511 and the second depression part 1301512. In this application, a gradient of a first slope 1301514 extending from a surface of the first protrusion part 1301513 to the first depression part 1301511 is less than a gradient of a second slope 1301515 extending from the surface of the first protrusion part 1301513 to the second depression part 1301512. In addition, in the first hinge assembly 1301 shown in FIG. 19, the surface of the first protrusion part 1301513 is an arc-shaped surface.

FIG. 19 shows a structural status of the first hinge assembly 1301 in a case in which the keyboard assembly 1000 is in a closed state. In this case, still refer to FIG. 20. When the first support plate 1201 and the keyboard body 11 are in the closed state, a protrusion part of the second cam surface 130161 of the first cam member 13016 is located in the first depression part 1301511. In a process in which the first support plate 1201 and the keyboard body 11 rotate back to back, the protrusion part of the second cam surface 130161 of the first cam member 13016 moves from the first depression part 1301511 to the second depression part 1301512. Specifically, the protrusion part of the second cam surface 130161 moves to the first protrusion part 1301513 along the first slope 1301514. When the protrusion part of the second cam surface 130161 moves to the surface of the first protrusion part 1301513, due to existence of a damping force, even if no opening force is exerted, the protrusion part of the second cam surface 130161 may also continue to move toward the second depression part 1301512 under the damping force. When a side surface of the first stop part 13121 abuts against a side surface of the second stop part 13131, the protrusion part of the second cam surface 130161 is located in the second depression part 1301512. In this case, the first support plate 1201 and the keyboard body 11 may be locked at this opening angle when there is no external action force. This can effectively improve support reliability of the keyboard assembly 1000. In this way, when the electronic device in which the keyboard assembly 1000 is used is in an open use state, even if a weight of the host 2000 is large, a size of the first support plate 1201 is small, or a tap operation is performed on the host 2000 of the electronic device, the electronic device can be stably maintained at the opening angle. This can effectively improve user experience.

In this embodiment of this application, the third cam surface 130152 of the conjoined cam 13015 may be disposed with reference to the first cam surface 130151, and the second cam member 13017 may be disposed with reference to the first cam member 13016. In other words, the third cam surface 130152 includes a third depression part, a fourth depression part, and a second protrusion part. The second protrusion part is located between the third depression part and the fourth depression part, and a surface of the second protrusion part is also an arc-shaped surface. In addition, a gradient of a third slope extending from a surface of the second protrusion part to the third depression part is less than a gradient of a fourth slope extending from the surface of the second protrusion part to the fourth depression part. In this way, when the first support plate 1201 and the keyboard body 11 are in the closed state, the protrusion part of the fourth cam surface 130171 of the second cam member 13017 is located in the third depression part, and in a process in which the first support plate 1201 and the keyboard body 11 rotate back to back, the protrusion part of the fourth cam surface 130171 of the second cam member 13017 moves from the third depression part to the fourth depression part. When a side surface of the third stop part 13122 abuts against a side surface of the fourth stop part, the protrusion part of the fourth cam surface 130171 of the second cam member 13017 is located in the fourth depression part.

In this application, when the keyboard assembly 1000 shown in FIG. 19 is used in a scenario in which a requirement for stop strength of a stopper is low, for example, used in an electronic device with a small weight of the host 2000, a depression depth of the second depression part 1301512 of the first cam surface 130151 of the conjoined cam 13015 may be less than a depression depth of the first depression part 1301511, and a depth of the fourth depression part of the third cam surface 130152 may be less than a depression depth of the third depression part. In this way, smoothness of relative rotation between the first support plate 1201 and the keyboard body 11 can further be improved when rotation positions of the first support plate 1201 and the keyboard body 11 in the open state are locked.

In addition, other structures of the first hinge assembly 1301 shown in FIG. 19 may be disposed with reference to any one of the foregoing embodiments. Details are not described herein again.

The foregoing embodiments are merely some example descriptions of the manner of disposing the first hinge assembly 1301 with a dual-shaft structure provided in this application. Based on this, adaptive deformations may be further performed based on a specific application scenario. Details are not listed one by one herein, but it should be understood that they all fall within the protection scope of this application.

It may be understood that, in the foregoing embodiment of this application, to implement the rotatable connection between the first support plate 1201 and the keyboard body 11, in addition to the dual-shaft structure, the first hinge assembly 1301 may be further disposed in another possible structure. The following describes some other possible manners of disposing the first hinge assembly 1301.

FIG. 21 is a diagram of another structure of the keyboard assembly 1000 according to an embodiment of this application. In the keyboard assembly, the first hinge assembly 1301 of the first rotating module 13 is of a single-shaft structure, that is, the first hinge assembly 1301 includes only one hinge. Specifically, refer to FIG. 22. FIG. 22 is an A-A sectional view of the keyboard assembly 1000 shown in FIG. 21. The first hinge assembly 1301 includes a first hinge 13028. The second plate edge 12012 of the first support plate 1201 is rotatably connected to the first hinge 13028, and an end part of the keyboard body 11 is rotatably connected to the first hinge 13028. In this case, both the first support plate 1201 and the keyboard body 11 are rotatably connected to the first hinge 13028. This helps simplify a structure of the first rotating module 13, and further helps implement a design of lightness and thinness of the keyboard assembly 1000.

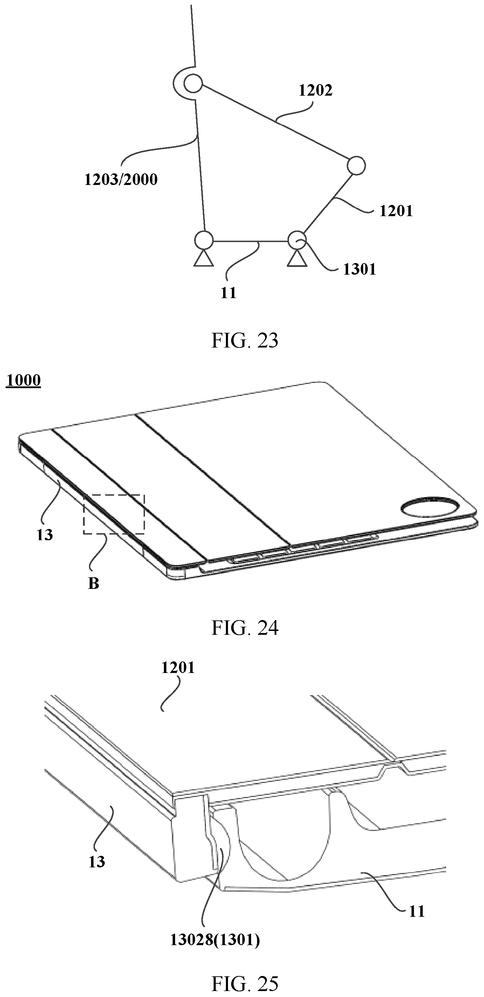

FIG. 23 is a diagram of a principle of a movement mechanism of the keyboard assembly 1000 shown in FIG. 21. It may be seen from FIG. 23 that, movement of the support component 12 of the keyboard assembly 1000 around the keyboard body 11 may be equivalent to four-rod transmission. Each of the first support plate 1201, the second support plate 1202, the third support plate 1203 and the host 2000, and the keyboard body 11 may be considered as one rod. A movement pair between the first support plate 1201 and the keyboard body 11, a movement pair between the second support plate 1202 and the first support plate 1201, and a movement pair between the second support plate 1202 and the third support plate 1203 and the host 2000 as a whole are all low pairs. In this case, the four-rod transmission mechanism includes only four low pairs. Therefore, a degree of freedom of the four-rod transmission mechanism is 3×3-2×4=1. Therefore, it may be understood that the degree of freedom of the four-rod transmission mechanism is unique, that is, a movement track of each rod of the four-rod transmission mechanism is unique. In the process in which the support component 12 of the keyboard assembly 1000 rotates around the keyboard body 11, a rotation track of each support plate is unique. In this way, when the keyboard assembly 1000 is in an open state, coplanarity between an outer surface of the first support plate 1201 and an outer surface of the keyboard body 11 can be improved, to improve appearance flatness of the keyboard assembly 1000. In addition, when the keyboard assembly 1000 is in a closed state, the first rotating module 13 of the keyboard assembly 1000 is designed to protrude outward. This helps implement an appearance difference design of the keyboard assembly 1000.

FIG. 24 is a diagram of another structure of the keyboard assembly 1000 according to an embodiment of this application. In the keyboard assembly 1000, the first hinge assembly 1301 of the first rotating module 13 is also of a single-shaft structure. Different from the keyboard assembly 1000 shown in FIG. 21, in the keyboard assembly shown in FIG. 24, the first rotating module 13 uses a sunken design. For details, refer to FIG. 25. FIG. 25 is an enlarged view of a partial structure at a position B of the keyboard assembly shown in FIG. 24. The first hinge assembly 1301 also includes the first hinge 13028, and both the first support plate 1201 and the keyboard body 11 are rotatably connected to the first hinge 13028, to implement the rotatable connection between the first support plate 1201 and the keyboard body 11.

In addition, when the keyboard assembly 1000 is in a closed state shown in FIG. 25, in a direction from the first support plate 1201 to the keyboard body 11, a projection of the first support plate 1201 covers a projection of the first rotating module 13. In this case, when the keyboard assembly 1000 is in the closed state, there is no protruding structure on a side edge of the keyboard assembly 1000, and appearance flatness of the keyboard assembly 1000 is high.

Refer to both FIG. 24 and FIG. 25. It should be noted that, in the keyboard assembly 1000, to improve the appearance flatness of the keyboard assembly 1000, a thickness of an end part that is of the keyboard body 11 and that is used to connect to the first rotating module 13 may be greater than or equal to a diameter of the first hinge 13028. Based on this, the first pen slot 1104 may be disposed only on the keyboard body 11 to meet a requirement for accommodating the stylus. In this case, the second pen slot 12013 does not need to be disposed on the first support plate 1201. This helps simplify a processing process of the keyboard assembly 1000.

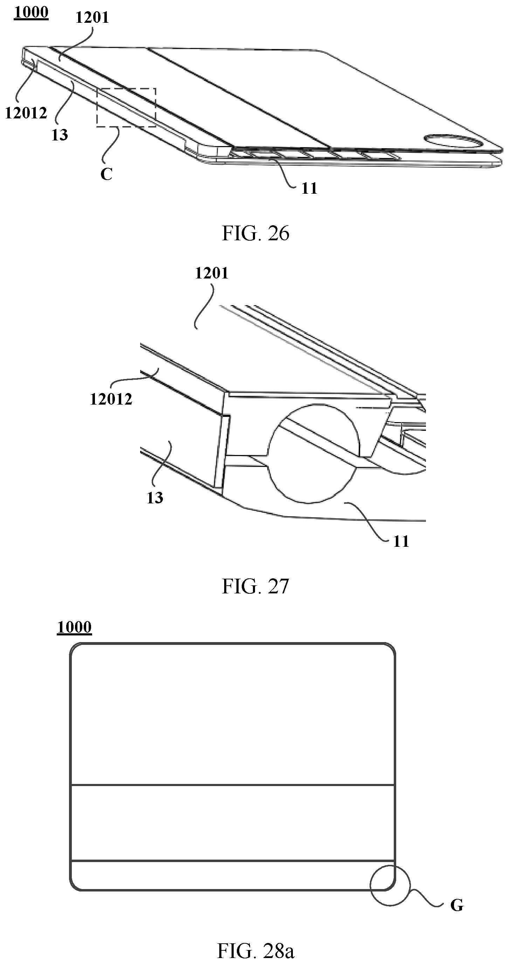

FIG. 26 is a diagram of another structure of the keyboard assembly 1000 according to an embodiment of this application. The first rotating module 13 of the keyboard assembly 1000 is a flexible material layer. Specifically, refer to FIG. 27. FIG. 27 is an enlarged view of a partial structure at a position C of the keyboard assembly shown in FIG. 26. The flexible material layer is connected to the first support plate 1201, and the flexible material layer is connected to an end part of the keyboard body 11. A material of the flexible material layer may be but is not limited to leather, provided that the first support plate 1201 can be reliably connected to the keyboard body 11 and the first support plate 1201 can rotate relative to the keyboard body 11. The first rotating module 13 of the keyboard assembly 1000 is disposed in the foregoing manner. This can effectively simplify a structure of the keyboard assembly 1000, and helps implement a design of lightness and thinness of the keyboard assembly 1000.

The foregoing embodiments are merely some example descriptions of the manner of disposing the first rotating module 13 provided in this application. Based on this, adaptive deformations may be further performed based on a specific application scenario. Details are not listed one by one herein, but it should be understood that they all fall within the protection scope of this application.

It may be learned from the foregoing description of the keyboard assembly 1000 provided in this application that, when the first support plate 1201 and the second support plate 1202 of the support component 12 are also rotatably connected to each other, a specific manner of connecting the first support plate 1201 to the second support plate 1202 is not limited in this application. For example, the first support plate and the second support plate may be flexibly connected to each other through a flexible material, or may be rigidly connected to each other through a rigid connection member. When the first support plate 1201 is connected to the second support plate 1202 through a flexible material layer, a material of the flexible material layer may be but is not limited to leather. The flexible material layer is connected to the first plate edge 12011 of the first support plate 1201, and the flexible material layer is connected to the third plate edge 12021 of the second support plate 1202. In addition, when the first support plate 1201 is also connected to the keyboard body 11 through a flexible material layer, the keyboard body 11, the first support plate 1201, and the second support plate 1202 may be connected to each other through the same flexible material layer. This can improve reliability of a connection of each structure, and further help simplify a structure of the keyboard assembly 1000.

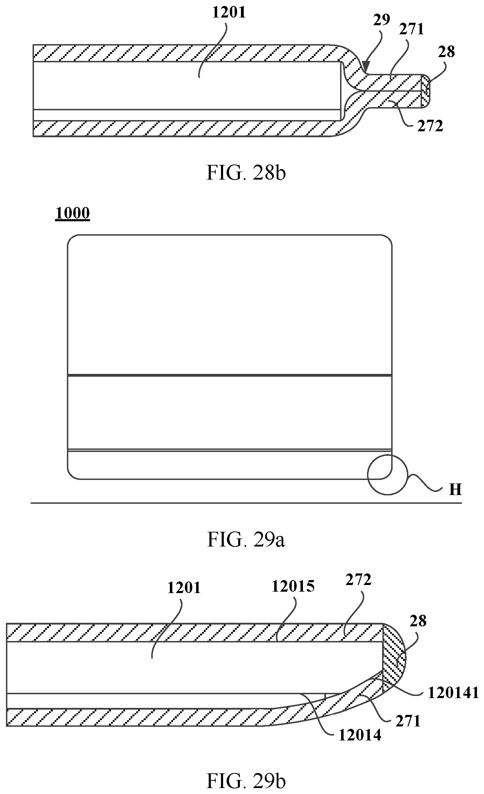

It should be noted that, in actual application, each support plate may be further wrapped through a flexible material layer, for example, wrapped through leather, to form an appearance surface of the flexible material. FIG. 28a is an appearance effect diagram of a keyboard assembly formed by using a conventional process. In addition, FIG. 28b is an enlarged view of a partial structure at a position G of the keyboard assembly shown in FIG. 28a. As shown in FIG. 28b, in the conventional process, the first support plate 1201 is used as an example. A first flexible material layer 271 and a second flexible material layer 272 that are attached to two back-to-back surfaces of the first support plate 1201 are laminated outside an edge of the first support plate 1201 and then cut, and then, an oil edge material layer 28 is formed on edges of the attached first flexible material layer 271 and second flexible material layer 272 by using an oil edge process, to protect the edges of the two flexible material layers while wrapping the first support plate 1201. However, as shown in FIG. 28b, in the conventional process, a laminated edge is left on a periphery of the first support plate 1201 wrapped by the flexible material layer, and an appearance parting line 29 exists on an edge of the keyboard assembly 1000. This greatly affects appearance aesthetics of the keyboard assembly 1000.

To resolve the foregoing problem, a process for attaching the flexible material layer is optimized in this application. Specifically, refer to FIG. 29a, FIG. 29a is an appearance effect diagram of a keyboard assembly according to an embodiment of this application. In addition, FIG. 29b is an enlarged view of a partial structure at a position H of a structure shown in FIG. 29a. In this embodiment of this application, the first support plate 1201 is still used as an example. The first support plate 1201 includes a first surface 12014 and a second surface 12015. The first surface 12014 is away from the keyboard body 11 relative to the second surface 12015. In other words, the first surface 12014 is located on an outer side of the second surface 12015.

Still refer to FIG. 29b. In this embodiment, the first surface 12014 includes an inclined surface 120141 extending in a direction facing an edge of the second surface 12015. In other words, a thickness of the first support plate 1201 at an edge is small, so that arc-shaped appearance edge effect can be formed. In addition, the keyboard assembly 1000 also includes the first flexible material layer 271 and the second flexible material layer 272. The first flexible material layer 271 is attached to the first surface 12014, and the second flexible material layer 272 is attached to the second surface 12015. The first flexible material layer 271, the first surface 12014, the second flexible material layer 272, and the second surface 12015 are flush with each other at the edge of the first support plate 1201.

It may be understood that, in this embodiment of this application, the inclined surface 120141 is disposed on a part that is of the first surface 12014 and that is close to the edge, to help improve reliability of attaching the first flexible material layer 271 to the first surface 12014.

In addition, in the embodiment shown in FIG. 29b, the keyboard assembly 1000 further includes the oil edge material layer 28 configured to cover edges of the first flexible material layer 271, the second flexible material layer 272, and the first support plate 1201, to protect the edge of the first support plate 1201.

It may be learned from comparison between FIG. 29b and FIG. 28b that, generation of an appearance parting line can be avoided by using the wrapping manner of the flexible material layer of the keyboard assembly provided in this application, so that the keyboard assembly 1000 can have a smooth, simple, and integrated appearance surface, to improve appearance aesthetics of the keyboard assembly 1000.

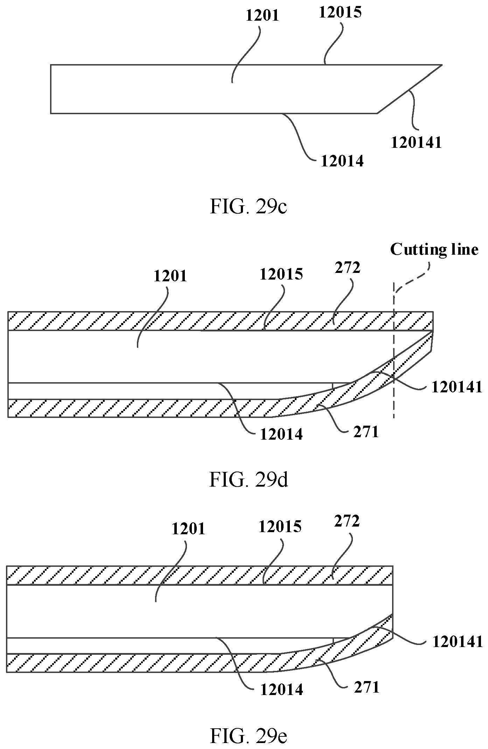

It should be noted that, during actual processing, the first support plate 1201 may be first cut, as shown in FIG. 29c, to form, on the first surface 12014, the extension surface 120141 extending in the direction facing the edge of the second surface 12015, so as to reduce the edge thickness of the first support plate 1201.

Then, refer to FIG. 29d. FIG. 29d is a diagram of an intermediate step of a process of attaching the flexible material layer according to an embodiment of this application. The first flexible material layer 271 is attached to the first surface 12014, and the second flexible material layer 272 is attached to the second surface 12015, to ensure reliability of attaching the two flexible material layers to surfaces of the first support plate 1201.

Then, based on a structure shown in FIG. 29d, the first flexible material layer 271, the first support plate 1201, and the second flexible material layer 272 may be cut along a cutting line by using a cutting process, to obtain a structure shown in FIG. 29e. It may be understood that, because the edge of the first support plate 1201 has been thinned before cutting, the first support plate has a low requirement on reliability of a cutting tool, thereby facilitating implementation of the cutting process.

Finally, oil edge processing is performed on edges of the first flexible material layer 271, the first support plate 1201, and the second flexible material layer 272, to form the oil edge material layer 28 that can protect the edges of the first flexible material layer 271, the first support plate 1201, and the second flexible material layer 272, to obtain the structure shown in FIG. 29b.

Therefore, the process of attaching the flexible material layer provided in this embodiment of this application is feasible, and the keyboard assembly obtained through processing can have a simple appearance.

In the foregoing embodiments, the process of attaching the flexible material layer provided in this application is described by using the first support plate 1201 as an example. However, in actual application, the entire support component 12 can be wrapped by the flexible material layer, the first flexible material layer 271 may be attached to a first attachment surface of the support component 12, the second flexible material layer 272 may be attached to a second attachment surface of the support component, the first attachment surface and the second attachment surface are disposed back to back, and the first attachment surface is away from the keyboard body 11 relative to the second attachment surface. A process of attaching the flexible material layer of the entire support component 12 is similar to the process of attaching the flexible material layer of the first support plate 1201. Details are not described herein again.

It should be noted that the flexible material layer of the support component 12 provided in this application may be disposed based on a specific structure of the keyboard assembly 1000 provided in any one of the foregoing embodiments, or may not be disposed based on a specific structure of the keyboard assembly 1000. That is, the process of attaching the flexible material layer may be used in any scenario in which the flexible material layer is required for wrapping, and therefore has a wide application scope.

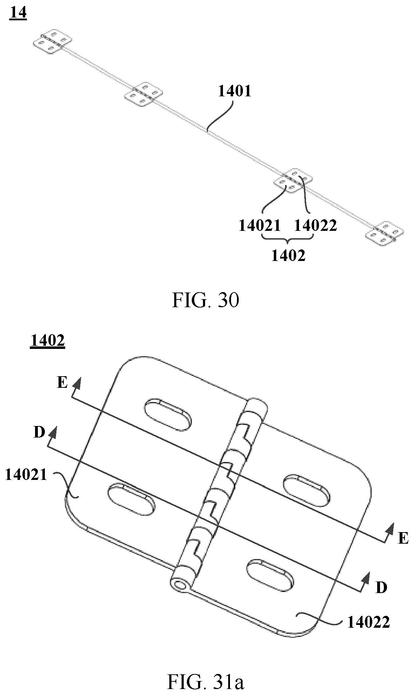

In a possible embodiment, when the first support plate 1201 is rigidly connected to the second support plate 1202, the keyboard assembly 1000 may further include a second rotating module 14. During specific implementation, refer to FIG. 30. FIG. 30 is a diagram of a structure of the second rotating module 14 according to an embodiment of this application. The second rotating module 14 includes a second hinge 1401 and a second hinge assembly 1402. FIG. 31a is a diagram of a structure of the second hinge assembly according to an embodiment of this application. The second hinge assembly 1402 includes a first rotating bracket 14021 and a second rotating bracket 14022, the first rotating bracket 14021 is rotatably connected to the second hinge 1401 shown in FIG. 30, and the first rotating bracket 14021 is fastened to the first plate edge 12011 of the first support plate 1201 shown in FIG. 4. A manner of fastening the first rotating bracket to the first plate edge may be but is not limited to a threaded connection or riveting. The second rotating bracket 14022 is rotatably connected to the second hinge 1401 shown in FIG. 30, and the second rotating bracket 14022 is fastened to the third plate edge 12021 of the second support plate 1202 shown in FIG. 4. A manner of fastening the second rotating bracket to the third plate edge may be but is not limited to a threaded connection or riveting. In this way, the first rotating bracket 14021 and the second rotating bracket 14022 can be rotatably connected to the second hinge 1401, to implement a rotatable connection between the first support plate 1201 and the second support plate 1202.

It may be understood that, to improve stability of rotatably connecting the first support plate 1201 to the second support plate 1202 through the second rotating module 14, in this application, the second rotating module 14 may include a plurality of second hinge assemblies 1402. For example, in FIG. 30, the second rotating module 14 includes four second hinge assemblies 1402, and each second hinge assembly 1402 may be disposed with reference to FIG. 31a. In this case, the first support plate 1201 and the second support plate 1202 may be rotatably connected to the second hinge 1401 through the plurality of second hinge assemblies 1402.

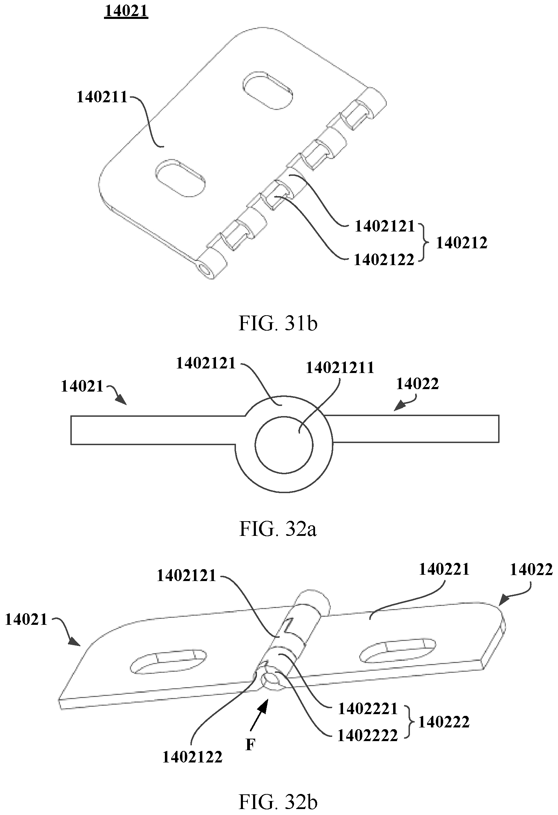

In this application, to avoid a case like irreversible folding or excessive bending of the first support plate 1201 and the second support plate 1202 in a rotation process, stop structures are disposed on the first rotating bracket 14021 and the second rotating bracket 14022. During specific implementation, refer to FIG. 31b. FIG. 31b is a diagram of a structure of the first rotating bracket 14021 according to an embodiment of this application. The first rotating bracket 14021 includes a first connection plate 140211 and a first connection arm 140212. The first connection plate 140211 is configured to be fastened to the first support plate 1201. The first connection arm 140212 is disposed at an end part of the first connection plate 140211, and the first connection arm 140212 is configured to rotatably connect to the second hinge 1401.

Still refer to FIG. 31b. The first connection arm 140212 includes a first connection part 1402121 and a first arc-shaped rotating part 1402122. The first connection part 1402121 is sleeved on the second hinge 1401. Specifically, refer to FIG. 32a. FIG. 32a is a D-D sectional view of the second hinge assembly shown in FIG. 31a, and may show a structure of the first connection part 1402121. The first connection part 1402121 includes a shaft hole 14021211, and the second hinge 1401 may penetrate the shaft hole 14021211 of the first connection part 1402121, to implement a rotatable connection between the first rotating bracket 14021 and the second hinge 1401. In addition, refer to both FIG. 30 and FIG. 31b. The first connection part 1402121 and the first arc-shaped rotating part 1402122 are arranged in an axial direction of the second hinge 1401, and the first connection part 1402121 is connected to the first arc-shaped rotating part 1402122. It may be understood that the first rotating bracket 14021 may include a plurality of first connection arms 140212 that are spaced apart in the axial direction of the second hinge 1401, to improve stability of the rotatable connection between the first rotating bracket 14021 and the second hinge 1401.

The structure of the second rotating bracket 14022 may be disposed reference to the first rotating bracket 14021. In other words, refer to FIG. 32b. FIG. 32b is an E-E sectional view of the second hinge assembly shown in FIG. 31a. The second rotating bracket 14022 includes a second connection plate 140221 and a second connection arm 140222, and the second connection plate 140221 is configured to be fastened to the second support plate 1202. The second connection arm 140222 is disposed at an end part of the second connection plate 140221, and the second connection arm 140222 includes a second connection part 1402221 and a second arc-shaped rotating part 1402222. The second hinge 1401 may penetrate a shaft hole of the second connection part 1402221, so that the second connection part 1402221 is sleeved on the second hinge 1401. In addition, the second connection part 1402221 and the second arc-shaped rotating part 1402222 are arranged in the axial direction of the second hinge 1401, and the second connection part 1402221 is connected to the second arc-shaped rotating part 1402222. The second rotating bracket 14022 may also include a plurality of second connection arms 140222 that are spaced apart in the axial direction of the second hinge 1401, to improve stability of the rotatable connection between the second rotating bracket 14022 and the second hinge 1401.

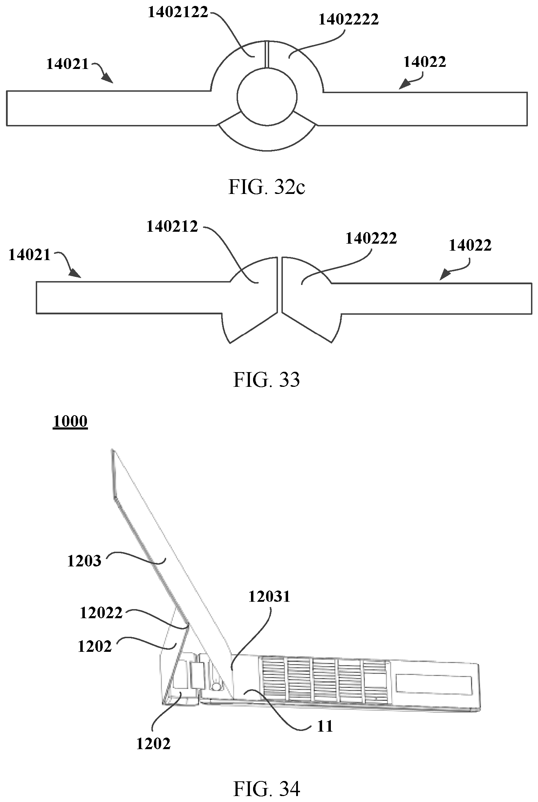

FIG. 32a may show a relative position between the first arc-shaped rotating part 1402122 and the second arc-shaped rotating part 1402222 in a case in which the keyboard assembly is in an open state. It may be seen from FIG. 32a that, in the second hinge assembly 1402, the first connection arm 140212 of the first rotating bracket 14021 and the second connection arm 140222 of the second rotating bracket 14022 are alternately disposed in the axial direction of the second hinge 1401, and a side surface of the first arc-shaped rotating part 1402122 of the first connection arm 140212 and a side surface of the second arc-shaped rotating part 1402222 of the second connection arm 140222 are disposed opposite to each other in a rotation direction of the first rotating bracket 14021 and the second rotating bracket 14022. In this way, when the first rotating bracket 14021 and the second rotating bracket 14022 rotate around the second hinge 1401 to a specified angle, for example, when the keyboard assembly is in the open state, refer to FIG. 32c. FIG. 32c is an F-direction view of the structure shown in FIG. 32a. One side surface of the first arc-shaped rotating part 1402122 of the first connection arm 140212 abuts against one side surface of the second arc-shaped rotating part 1402222 of the second connection arm 140222. In addition, when the keyboard assembly is in a closed state, another side surface of the first arc-shaped rotating part 1402122 of the first connection arm 140212 abuts against another side surface of the second arc-shaped rotating part 1402222 of the second connection arm 140222, to limit rotation positions of the first rotating bracket 14021 and the second rotating bracket 14022, and limit a rotation angle between the first support plate 1201 and the second support plate 1202.

It may be understood that a radian of the first arc-shaped rotating part 1402122 and a radian of the second arc-shaped rotating part 1402222 may be specifically set based on a specified angle at which the first rotating bracket 14021 and the second rotating bracket 14022 rotate around the second hinge 1401.

The foregoing is merely an example description of a specific manner of disposing the second hinge assembly 1402 of the second rotating module 14 provided in this embodiment of this application. In another possible embodiment of this application, the second hinge assembly 1402 may alternatively be disposed in another possible manner. For example, refer to FIG. 33. FIG. 33 is a sectional view of another assembly structure of the first rotating bracket 14021 and the second rotating bracket 14022 according to an embodiment of this application. In FIG. 33, the first connection arm 140212 of the first rotating bracket 14021 is an arc-shaped rotating block, and the second connection arm 140222 of the second rotating bracket 14022 is also an arc-shaped rotating block. The first connection arm 140212 and the second connection arm 140222 are disposed in a one-to-one correspondence in an axial direction of the second hinge 1401, and a side surface of the first connection arm 140212 and a side surface of the second connection arm 140222 are disposed opposite to each other in a rotation direction of the first rotating bracket 14021 and the second rotating bracket 14022, so that when the first rotating bracket 14021 and the second rotating bracket 14022 rotate around the second hinge 1401 to a specified angle, the side surface of the first connection arm 140212 abuts against the side surface of the second connection arm 140222, to limit rotation positions of the first rotating bracket 14021 and the second rotating bracket 14022, so as to limit a rotation angle between the first support plate 1201 and the second support plate 1202. Various possible manners of disposing the second hinge assembly 1402 are not listed one by one herein, but it should be understood that they all fall within the protection scope of this application.

In this application, the first support plate 1201 is connected to the second support plate 1202 through the foregoing rigid connection member, so that a case like irreversible folding or excessive bending of the first support plate and the second support plate can be effectively reduced in a rotation process of the first support plate 1201 and the second support plate 1202. This can effectively improve smoothness of movement of the support component 12, thereby improving user experience.

In addition, because the second support plate 1202 is also rotatably connected to the third support plate 1203, in this application, a rotatable connection member between the second support plate 1202 and the third support plate 1203 may be disposed with reference to the second rotating module 14 between the first support plate 1201 and the second support plate 1202. Details are not described herein again.

It may be learned from the foregoing description of the support component 12 of the keyboard assembly 1000 that the third support plate 1203 is configured to connect to the host 2000, so that the third support plate 1203 and the host 2000 move as a whole. When the electronic device is in an open state, the host 2000 and the third support plate 1203, the second support plate 1202, the first support plate 1201, and the keyboard body 11 form an approximate triangular support structure, so that the electronic device is stably maintained in the open state.

In some possible embodiments, some adaptive deformations may be further performed on the structure of the keyboard assembly 1000, so that the keyboard assembly 1000 can also form an approximate triangular support structure. In this case, even if there is no connection structure between the host 2000 and the keyboard body 11, the keyboard assembly 1000 can stably support the host 2000. This helps expand an application scenario range of the keyboard assembly 1000. During specific implementation, refer to FIG. 34. FIG. 34 is a diagram of another structure of the keyboard assembly 1000 according to an embodiment of this application. In the keyboard assembly 1000, the fourth plate edge 12022 of the second support plate 1202 is rotatably connected to a plate surface of the third support plate 1203. In addition, when the keyboard assembly 1000 is in an open state, the fifth plate edge 12031 of the third support plate 1203 abuts against the keyboard body 11. In this way, the third support plate 1203, the second support plate 1202, the first support plate 1201, and the keyboard body 11 may form an approximate triangular support structure.

It should be noted that a specific manner of a connection between the fifth plate edge 12031 of the third support plate 1203 and the keyboard body 11 is not limited in this application. For example, the third support plate 1203 may be connected to the keyboard body 11 in a magnetic attraction manner. For a specific disposing manner, refer to the manner of magnetic attraction between the host 2000 and the keyboard body 11. Details are not described herein again. Alternatively, in some possible embodiments, the third support plate 1203 may be connected to the keyboard body 11 in a clamping manner. For example, the keyboard body 11 may include a plurality of protrusions (at positions in FIG. 34) that are sequentially disposed along the first support plate 1201 away from the support component 12. In this way, the third support plate 1203 may be clamped to protrusions at different positions, to adjust the keyboard assembly 1000 at a plurality of angles in the open state.

When the keyboard assembly 1000 shown in FIG. 34 is used in an electronic device, the third support plate 1203 may also be detachably connected to the host 2000. For a specific disposing manner, refer to any one of the foregoing embodiments. Details are not described herein again. In addition, because the keyboard assembly 1000 shown in FIG. 34 can form a stable approximate triangular support structure, a connection structure or no connection structure may be disposed between the host 2000 of the electronic device in which the keyboard assembly 1000 is used and the keyboard body 11. Therefore, the keyboard assembly 1000 has a wide application scenario range.

In addition, in some application scenarios, the host 2000 of the electronic device may be separately provided with a support structure, and the support structure may be disposed in a plurality of manners. For example, the support structure may be a part of the host 2000. In this case, the host includes a support arm 26, and the support arm 26 is rotatably connected to the rear cover 23 of the host 2000. Alternatively, the support structure is a protective case. In this case, the support structure includes a housing and a support arm 26. The housing is sleeved on the host 2000, and the support arm 26 is rotatably connected to an outer surface of the housing, to implement a rotatable connection between the support arm 26 and the rear cover 23 of the host 2000.

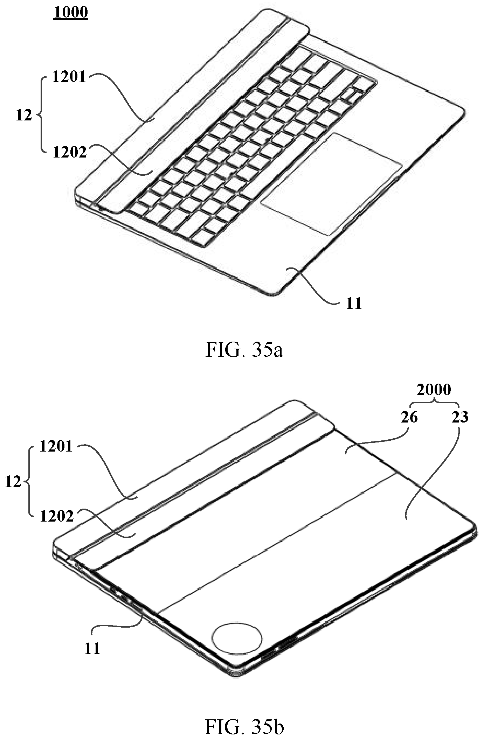

Therefore, it may be understood that, when the host 2000 is separately provided with the support structure, the third support plate 1203 may be omitted from the keyboard assembly 1000. As shown in FIG. 35a, FIG. 35a is a diagram of another structure of the keyboard assembly 1000 according to an embodiment of this application. Because the third support plate 1203 is not disposed on the keyboard assembly 1000, a structure of the keyboard assembly 1000 is simplified, and a weight of the keyboard assembly 1000 is small.

In addition, when the keyboard assembly 1000 shown in FIG. 35a is used in an electronic device, refer to FIG. 35b. FIG. 35b is a diagram of a structure of the electronic device in which the keyboard assembly 1000 shown in FIG. 35a is used. The second support plate 1202 of the support component 12 of the keyboard assembly 1000 may be connected to the support arm 26 of the host 2000. A manner of connecting the second support plate 1202 to the support arm 26 may be magnetic attraction or insertion, or may be any other possible detachable manner.

It should be noted that, in this application, when the support arm 26 is a part of the host 2000, the host 2000 and the keyboard assembly 1000 may further transmit an electrical signal through the connection between the second support plate 1202 and the support arm 26. During specific implementation, the second support plate 1202 is electrically connected to the keyboard body 11. In addition, the second support plate 1202 may be electrically connected to the support arm 26 in a manner of, but not limited to, wireless charging coil or connector insertion. Because a technology for implementing an electrical connection between two mechanical parts is mature, details are not described herein.

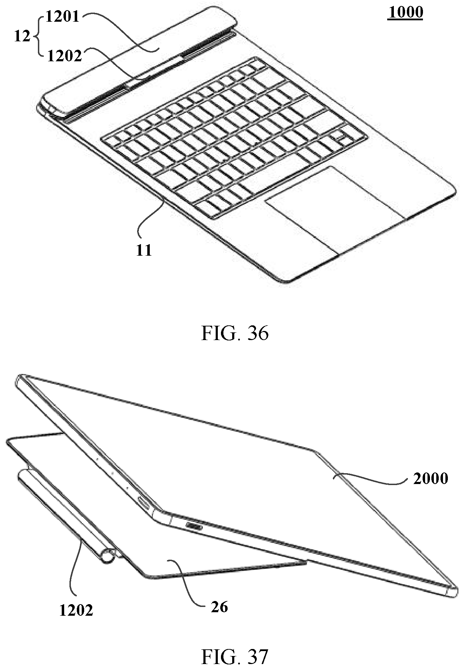

It may be understood that, when the host 2000 is separately disposed with the support structure, the second support plate 1202 only needs to be reliably connected to the support arm 26. Based on this, a size of the second support plate 1202 of the keyboard assembly 1000 may be set to be small. For example, in the keyboard assembly shown in FIG. 36, the second support plate 1202 is disposed as a first connector. In addition, FIG. 37 is a diagram of a structure in which the second support plate 1202 of the keyboard assembly shown in FIG. 36 is connected to the support arm 26. When the support arm 26 of the host 2000 includes a second connector, the second support plate 1202 may be detachably connected to the support arm 26 through insertion of the first connector and the second connector, and an electrical connection between the second support plate 1202 and the support arm 26 may be further implemented. In this way, a weight of the keyboard assembly 1000 can further be reduced when a requirement for the connection between the second support plate 1202 and the support arm 26 of the host 2000 can be met.

In addition, the second support plate 1202 of the keyboard assembly 1000 shown in FIG. 36 may alternatively be connected to the support arm 26 of the host 2000 in a magnetic attraction manner. Alternatively, there are both an insertion force and a magnetic attraction force between the second support plate 1202 and the support arm 26, to improve reliability of the connection between the second support plate 1202 and the support arm 26.

The keyboard assembly 1000 provided in embodiments of this application can provide reliable support for the host of the electronic device according to a multi-rod transmission principle while meeting a requirement for smoothly opening the electronic device. The keyboard assembly 1000 has a simple structure. This helps implement a design of miniaturization of the keyboard assembly 1000, and further meets design requirements for lightness, thinness, and miniaturization of the electronic device, thereby meeting a portability requirement of a user, and improving user experience.

In actual application, both the host 2000 and the keyboard assembly 1000 need to be powered by a power supply. The host 2000 may use a battery as a power supply thereof. The battery may be configured to: store electric energy provided by an external power supply, and provide the electric energy for the host 2000. The keyboard assembly 1000 may usually be directly connected to an external power supply through a power supply interface (for example, a type-C interface), to supply power to the keyboard assembly through the external power supply.

In a conventional design, a power supply interface of the keyboard assembly 1000 is usually disposed on the keyboard body 11 or the first rotating module 13, and a charging control circuit board that receives an external power supply through the power supply interface is disposed on the keyboard body 11. As a result, a thickness of the keyboard body 11 or the first rotating module 13 is increased. This is not conducive to implementing a design of thinness of the keyboard assembly 1000. In addition, currently, in some solutions, it is further expected that the power supply interface of the keyboard assembly 1000 can be used to supply power to a battery of the host 2000. Therefore, a trace for connecting the charging control circuit board to the battery of the host 2000 needs to pass through the first rotating module 13. Due to limitation of a size of the first rotating module 13, the trace can only be used to support flowing of a low current, which affects a charging speed.

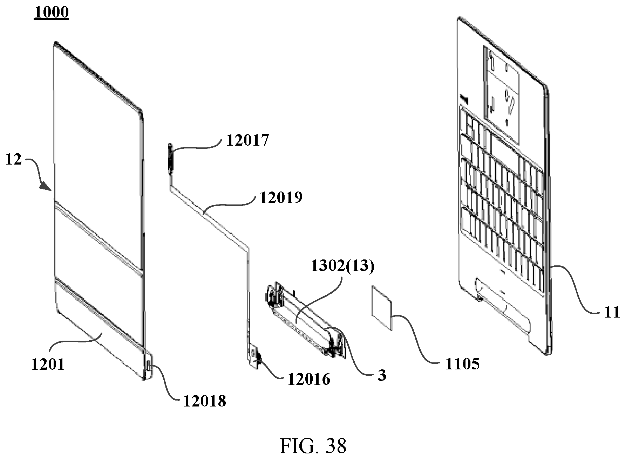

Refer to FIG. 38, to resolve the foregoing problem. FIG. 38 is an exploded view of another structure of the keyboard assembly according to an embodiment of this application. In this embodiment, the keyboard assembly 1000 further includes a charging control circuit board 12016, a connector 12017, and a main circuit board 1105. The charging control circuit board 12016 and the connector 12017 are disposed on the support component 12, and the main circuit board 1105 is disposed on the keyboard body 11. The charging control circuit board 12016 is electrically connected, to receive an external power supply. Specifically, the charging control circuit board 12016 may be electrically connected to a power supply interface 12018 disposed on the first support plate 1201, to receive the external power supply through the power supply interface 12018. A specific form of disposing the power supply interface 12018 is not limited in this application. For example, the power supply interface may be a type-C interface or an interface in another possible form. This is not limited herein. In this case, in this embodiment of this application, the charging control circuit board 12016 may alternatively be disposed on the first support plate 1201, so that a distance between the charging control circuit board 12016 and each of the power supply interface 12018 and the main circuit board 1105 is short, to facilitate an electrical connection between the charging control circuit board 12016 and each of the power supply interface 12018 and the main circuit board 1105.

As shown in FIG. 38, in this application, the charging control circuit board 12016 may be electrically connected to the main circuit board 1105 through a cable 3. It may be understood that, because the charging control circuit board 12016 is disposed on the first support plate 1201, and the main circuit board 1105 is disposed on the keyboard body 11, a part of the cable 3 penetrates the first rotating module 13. Specifically, the part penetrates the main shaft 1302 of the first rotating module 13. In this way, the charging control circuit board 12016 may be configured to supply power to the main circuit board 1105.

According to the design solution provided in this application, the charging control circuit board 12016 is disposed on the first support plate 1201, and the main circuit board 1105 is disposed on the keyboard body 11. This helps increase space utilization of the keyboard assembly 1000, and further helps reduce a thickness of the keyboard body 11, thereby implementing a design of thinness of the keyboard assembly 1000.

Still refer to FIG. 38. In this embodiment, the charging control circuit board 12016 is further configured to supply power to the battery of the host through the connector 12017. For example, the connector 12017 may be disposed on the first support plate 1201, the second support plate 1202, or the third support plate 1203, and may be specifically disposed based on a relative position between the connector 12017 and a charging port of the host, to implement an electrical connection between the connector 12017 and the host. In addition, in this application, the charging control circuit board 12016 may be electrically connected to the connector 12017 through a flexible circuit board 12019. This helps meet flowing of a high current between the charging control circuit board 12016 and the connector 12017, thereby increasing a speed of charging the battery of the host by the charging control circuit board 12016.

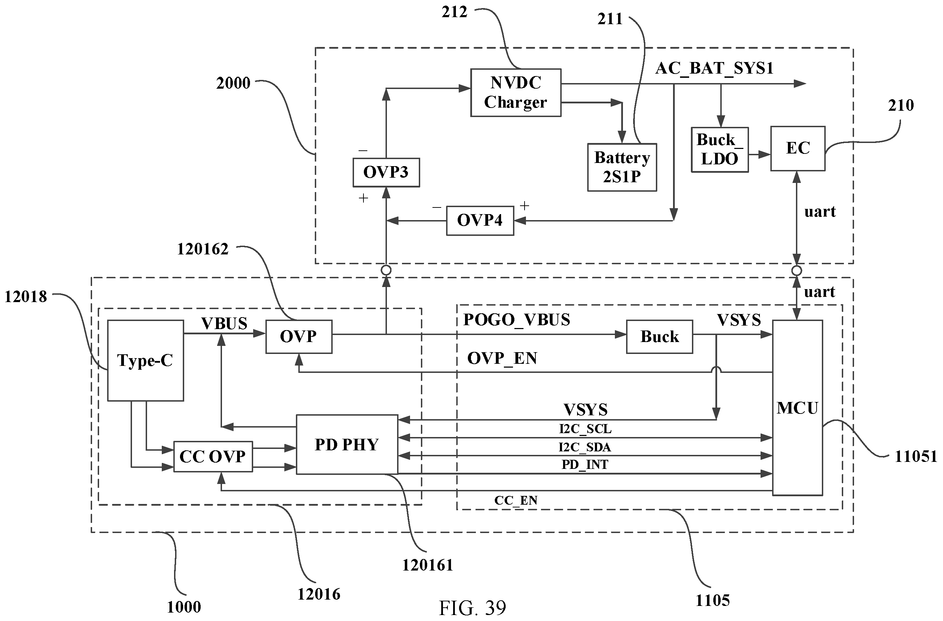

It may be learned from the foregoing description of the structure design in which the charging control circuit board 12016 is disposed on the first support plate 1201 and the main circuit board 1105 is disposed on the keyboard body 11 that, in this application, a power supply system of the keyboard assembly 1000 also uses a distributed design solution. During specific implementation, refer to FIG. 39. FIG. 39 is a diagram of a topology structure of a power supply system of an electronic device according to an embodiment of this application. FIG. 39 shows a charging circuit of the host 2000 and a power supply circuit of the keyboard assembly 1000. The charging circuit of the host 2000 may include, for example, an auxiliary processor 210 of the host, a battery 211, and a power manager 212. The power supply circuit of the keyboard assembly 1000 may include two parts: a power supply circuit disposed on the charging control circuit board 12016, and a power supply circuit disposed on the main circuit board 1105. In other words, the power supply circuit of the keyboard assembly 1000 is distributed on the first support plate 1201 and the keyboard body 11.

As shown in FIG. 39, the charging control circuit board 12016 includes a charging controller 120161, and the main circuit board 1105 includes a mainboard processor 11051. The charging controller 120161 is configured to transmit an external power supply signal received through the power supply interface 12018 to the mainboard processor 11051. The auxiliary processor 210 of the host is configured to: monitor a battery level of the battery 211 of the host 2000, and notify the mainboard processor 11051 of a monitoring result. When learning, via the auxiliary processor 210 of the host, that the battery 211 is in a non-fully-charged state, the mainboard processor 11051 controls the charging control circuit board 12016 to transmit an electrical signal to the power manager 212 via an overvoltage protection load switch 120162, and the power manager 212 transmits the electrical signal to the battery 211 according to a specified charging policy, to charge the battery 211.

It should be noted that, in this application, the non-fully-charged state in which the battery 211 starts to be charged may be set based on an actual power consumption requirement of the host 2000, a power storage capability of the battery 211, and the like. For example, when electric energy stored in the battery 211 is less than 20% of a fully-charged state of the battery, the battery 211 may be charged.

In this application, the power supply circuit of the keyboard assembly 1000 is disposed in a distributed layout manner, so that a rate of charging the battery 211 of the host 2000 can be ensured, and internal space utilization of the keyboard assembly 1000 can further be increased. This helps improve exquisiteness of the keyboard assembly 1000.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A keyboard assembly, comprising a keyboard body, wherein the keyboard body comprises a plurality of keys, and the keyboard assembly further comprises a first support plate, a second support plate, and a third support plate, wherein
the first support plate comprises a first plate edge and a second plate edge that are disposed opposite to each other, the second support plate comprises a third plate edge and a fourth plate edge that are disposed opposite to each other, the first plate edge is rotatably connected to the third plate edge, the second plate edge is rotatably connected to an end part of the keyboard body, and the fourth plate edge is rotatably connected to the third support plate.

2. The keyboard assembly according to claim 1, wherein the keyboard assembly further comprises a first rotating module, the first rotating module comprises a first hinge assembly, the first hinge assembly comprises a first shaft and a second shaft, an axis of the first shaft is parallel to and does not overlap an axis of the second shaft, the first shaft is fastened to the second plate edge of the first support plate, and the second shaft is fastened to the end part of the keyboard body.

3. The keyboard assembly according to claim 2, wherein the first hinge assembly further comprises a first fastening bracket and a second fastening bracket; the first fastening bracket is disposed at an end part of the first shaft, and the first fastening bracket is configured to drive the first shaft to rotate synchronously; the second fastening bracket is disposed at an end part of the second shaft, and the second fastening bracket is configured to drive the second shaft to rotate synchronously; and the first fastening bracket is fastened to the second plate edge of the first support plate, and the second fastening bracket is fastened to the end part of the keyboard body.

4. The keyboard assembly according to claim 2 or 3, wherein the first hinge assembly further comprises a connection member, a first stopper, and a second stopper, the connection member is sleeved on the first shaft and the second shaft, the first stopper is sleeved on the first shaft, the second stopper is sleeved on the second shaft, a relative position between the first stopper and the first shaft is fixed in a rotation direction of the first shaft, and a relative position between the second stopper and the second shaft is fixed in a rotation direction of the second shaft; and
when the first stopper abuts against the connection member, and the second stopper abuts against the connection member, the first support plate stops rotating toward a side away from the keyboard body.

5. The keyboard assembly according to claim 4, wherein an end part that is of the connection member and that faces the first stopper comprises a first stop part, an end part that is of the first stopper and that faces the connection member comprises a second stop part, and a side surface of the first stop part and a side surface of the second stop part are disposed opposite to each other in the rotation direction of the first shaft; and
an end part that is of the connection member and that faces the second stopper comprises a third stop part, an end part that is of the second stopper and that faces the connection member comprises a fourth stop part, and a side surface of the third stop part and a side surface of the fourth stop part are disposed opposite to each other in the rotation direction of the second shaft; and when the side surface of the first stop part abuts against the side surface of the second stop part, and the side surface of the third stop part abuts against the side surface of the fourth stop part, the first support plate stops rotating toward the side away from the keyboard body.

6. The keyboard assembly according to claim 4 or 5, wherein the first hinge assembly further comprises a conjoined cam, a first cam member, and a second cam member, the conjoined cam is sleeved on the first shaft and the second shaft, the first cam member is sleeved on the first shaft, the second cam member is sleeved on the second shaft, the conjoined cam is located between the first stopper and the first cam member, and the conjoined cam is located between the second stopper and the second cam member; and
an end face that is of the conjoined cam and that faces the first cam member comprises a first cam surface, an end face that is of the first cam member and that faces the conjoined cam comprises a second cam surface, and the first cam surface abuts against the second cam surface; and an end face that is of the conjoined cam and that faces the second cam member comprises a third cam surface, an end face that is of the second cam member and that faces the conjoined cam comprises a fourth cam surface, and the third cam surface abuts against the fourth cam surface.

7. The keyboard assembly according to claim 6, wherein when the first stopper abuts against the connection member, a protrusion part of the first cam surface abuts against a protrusion part of the second cam surface; and when the second stopper abuts against the connection member, a protrusion part of the third cam surface abuts against a protrusion part of the fourth cam surface.

8. The keyboard assembly according to claim 6, wherein the first cam surface comprises a first depression part, a second depression part, and a first protrusion part, a depression depth of the second depression part is less than a depression depth of the first depression part, the first protrusion part is located between the first depression part and the second depression part, a surface of the first protrusion part is an arc-shaped surface, and a gradient of a first slope extending from the surface of the first protrusion part to the first depression part is less than a gradient of a second slope extending from the surface of the first protrusion part to the second depression part; when the keyboard assembly is in a closed state, a protrusion part of the second cam surface of the first cam member is located in the first depression part; and when the connection member abuts against the first stopper, the protrusion part of the second cam surface of the first cam member is located in the second depression part; and
the third cam surface comprises a third depression part, a fourth depression part, and a second protrusion part, a depression depth of the fourth depression part is less than a depression depth of the third depression part, the second protrusion part is located between the third depression part and the fourth depression part, a surface of the second protrusion part is an arc-shaped surface, and a gradient of a third slope extending from the surface of the second protrusion part to the third depression part is less than a gradient of a fourth slope extending from the surface of the second protrusion part to the fourth depression part; when the keyboard assembly is in the closed state, a protrusion part of the fourth cam surface of the second cam member is located in the third depression part; and when the connection member abuts against the second stopper, the protrusion part of the fourth cam surface of the second cam member is located in the fourth depression part.

9. The keyboard assembly according to claim 4 or 5, wherein the end part that is of the connection member and that faces the first stopper further comprises a fifth cam surface, the end part that is of the first stopper and that faces the connection member further comprises a sixth cam surface, and the fifth cam surface abuts against the sixth cam surface;
the end part that is of the connection member and that faces the second stopper further comprises a seventh cam surface, the end part that is of the second stopper and that faces the connection member further comprises an eighth cam surface, and the seventh cam surface abuts against the eighth cam surface; and
when the connection member abuts against the first stopper, a protrusion part of the fifth cam surface abuts against a protrusion part of the sixth cam surface; and when the connection member abuts against the second stopper, a protrusion part of the seventh cam surface abuts against a protrusion part of the eighth cam surface.

10. The keyboard assembly according to claim 4 or 5, wherein the end part that is of the connection member and that faces the first stopper further comprises a fifth cam surface, the end part that is of the first stopper and that faces the connection member further comprises a sixth cam surface, and the fifth cam surface abuts against the sixth cam surface; the fifth cam surface comprises a fifth depression part, a sixth depression part, and a third protrusion part, the third protrusion part is located between the fifth depression part and the sixth depression part, a surface of the third protrusion part is an arc-shaped surface, and a gradient of a fifth slope extending from the surface of the third protrusion part to the fifth depression part is less than a gradient of a sixth slope extending from the surface of the third protrusion part to the sixth depression part; when the keyboard assembly is in a closed state, a protrusion part of the sixth cam surface of the first stopper is located in the fifth depression part; and when the side surface of the first stop part abuts against the side surface of the second stop part, the protrusion part of the sixth cam surface of the first stopper is located in the sixth depression part; and
the end part that is of the connection member and that faces the second stopper further comprises a seventh cam surface, the end part that is of the second stopper and that faces the connection member further comprises an eighth cam surface, and the seventh cam surface abuts against the eighth cam surface; the seventh cam surface comprises a seventh depression part, an eighth depression part, and a fourth protrusion part, the fourth protrusion part is located between the seventh depression part and the eighth depression part, a surface of the fourth protrusion part is an arc-shaped surface, and a gradient of a seventh slope extending from the surface of the fourth protrusion part to the seventh depression part is less than a gradient of an eighth slope extending from the surface of the fourth protrusion part to the eighth depression part; when the keyboard assembly is in the closed state, a protrusion part of the eighth cam surface of the second stopper is located in the seventh depression part; and when the side surface of the third stop part abuts against the side surface of the fourth stop part, the protrusion part of the eighth cam surface of the second stopper is located in the eighth depression part.

11. The keyboard assembly according to any one of claims 2 to 10, wherein the first shaft comprises a first spiral surface, the second shaft comprises a second spiral surface, and the first spiral surface and the second spiral surface have a same rotation direction; and
the first hinge assembly further comprises an idler gear, the idler gear is located between the first spiral surface and the second spiral surface, the first spiral surface is engaged with a gear surface of the idler gear, and the second spiral surface is engaged with the gear surface of the idler gear.

12. The keyboard assembly according to claim 1, wherein the keyboard assembly further comprises a first rotating module, the first rotating module comprises a first hinge, the second plate edge of the first support plate is rotatably connected to the first hinge, and the end part of the keyboard body is rotatably connected to the first hinge.

13. The keyboard assembly according to claim 1, wherein the keyboard assembly further comprises a first rotating module, the first rotating module is a flexible material layer, the flexible material layer is connected to the second plate edge of the first support plate, and the flexible material layer is connected to the end part of the keyboard body.

14. The keyboard assembly according to any one of claims 1 to 13, wherein when the keyboard assembly is in the closed state, a projection of the first support plate covers a projection of the first rotating module in a direction from the first support plate to the keyboard body.

15. The keyboard assembly according to any one of claims 1 to 14, wherein the keyboard assembly further comprises a second rotating module, the second rotating module comprises a second hinge and a second hinge assembly, and the second hinge assembly comprises a first rotating bracket and a second rotating bracket; the first rotating bracket is rotatably connected to the second hinge, and the first rotating bracket is fastened to the first plate edge of the first support plate; and the second rotating bracket is rotatably connected to the second hinge, and the second rotating bracket is fastened to the third plate edge of the second support plate.

16. The keyboard assembly according to claim 15, wherein the first rotating bracket comprises a first connection plate and a first connection arm, the first connection plate is fastened to the first plate edge of the first support plate, the first connection arm is disposed at an end part of the first connection plate, the first connection arm comprises a first connection part and a first arc-shaped rotating part, the first connection part and the first arc-shaped rotating part are arranged in an axial direction of the second hinge, and the first connection part is sleeved on the second hinge;
the second rotating bracket comprises a second connection plate and a second connection arm, the second connection plate is fastened to the third plate edge of the second support plate, the second connection arm is disposed at an end part of the second connection plate, the second connection arm comprises a second connection part and a second arc-shaped rotating part, the second connection part and the second arc-shaped rotating part are arranged in the axial direction of the second hinge, and the second connection part is sleeved on the second hinge; and
the first connection arm and the second connection arm are alternately disposed in the axial direction of the second hinge, and a side surface of the first arc-shaped rotating part and a side surface of the second arc-shaped rotating part are disposed opposite to each other in rotation directions of the first rotating bracket and the second rotating bracket.

17. The keyboard assembly according to claim 15, wherein the first rotating bracket comprises a first connection plate and a first connection arm, the first connection plate is fastened to the first plate edge of the first support plate, the first connection arm is disposed at an end part of the first connection plate, and the first connection arm is an arc-shaped rotating block;
the second rotating bracket comprises a second connection plate and a second connection arm, the second connection plate is fastened to the third plate edge of the second support plate, the second connection arm is disposed at an end part of the second connection plate, and the second connection arm is an arc-shaped rotating block; and
the first connection arm and the second connection arm are disposed in a one-to-one correspondence in the axial direction of the second hinge, and a side surface of the first connection arm and a side surface of the second connection arm are disposed opposite to each other in rotation directions of the first rotating bracket and the second rotating bracket.

18. The keyboard assembly according to any one of claims 1 to 14, wherein the support component further comprises a flexible material layer, the flexible material layer is connected to the first plate edge of the first support plate, and the flexible material layer is connected to the third plate edge of the second support plate.

19. The keyboard assembly according to any one of claims 1 to 18, wherein when the keyboard assembly is in an open state, an included angle, facing the key, between an outer surface that is of the first support plate and that is away from the key and an outer surface that is of the keyboard body and that is away from the key is greater than or equal to 175° and less than or equal to 185°.

20. The keyboard assembly according to any one of claims 1 to 19, wherein the third support plate comprises a fifth plate edge, and the fourth plate edge of the second support plate is rotatably connected to the fifth support plate; or
the third support plate comprises a fifth plate edge, the fourth plate edge of the second support plate is rotatably connected to a plate surface of the third support plate, and the fifth plate edge abuts against the keyboard body when the keyboard assembly is in the open state.

21. The keyboard assembly according to any one of claims 1 to 20, wherein the keyboard body is provided with a first pen slot, the first support plate is provided with a second pen slot, and when the keyboard assembly is in the closed state, the first pen slot and the second pen slot are disposed opposite to each other to form an accommodation space for accommodating a stylus.

22. An electronic device, comprising a host and the keyboard assembly according to any one of claims 1 to 21, wherein the host is located on a side that is of the keyboard body and on which the plurality of keys are disposed, and the third support plate of the keyboard assembly is detachably connected to the host.

23. The electronic device according to claim 22, wherein the host, the second support plate, the first support plate, and the keyboard body form a triangular support structure when the electronic device is in an open state.

24. The electronic device according to claim 22 or 23, wherein the host further comprises a third magnetic member, the third magnetic member is located at an end part of the host, the keyboard body further comprises a fourth magnetic member, and the third magnetic member and the fourth magnetic member are attracted to each other when the electronic device is in the open state.

25. The electronic device according to claim 24, wherein the keyboard body comprises the plurality of fourth magnetic members that are sequentially disposed away from the first support plate.

26. The electronic device according to any one of claims 22 to 25, wherein the keyboard assembly further comprises a charging control circuit board, a connector, and a main circuit board, the charging control circuit board is disposed on the first support plate, the main circuit board is disposed on the keyboard body, and the charging control circuit board is configured to receive an external power supply, is configured to supply power to a battery of the host via the connector, and is configured to supply power to the main circuit board.

27. The electronic device according to claim 26, wherein the first support plate further comprises a power supply interface, and the charging control circuit board receives the external power supply through the power supply interface.

28. The electronic device according to claim 26 or 27, wherein the connector is disposed on the first support plate, the second support plate, or the third support plate, and the charging control circuit board is electrically connected to the connector through a flexible circuit board.

29. The electronic device according to any one of claims 26 to 28, wherein the charging control circuit board comprises a charging controller, and the main circuit board comprises a mainboard processor, wherein
the charging controller is configured to transmit a received external power supply signal to the mainboard processor; and
the mainboard processor is configured to control, when the battery of the host is in a non-fully-charged state, the charging controller to charge the battery of the host.
